(19) Europäisches Patentamt
European Patent Office
Office européen des brevets

(11) **EP 1 496 236 B1**

(12) **EUROPEAN PATENT SPECIFICATION**

(45) Date of publication and mention
of the grant of the patent:
**28.02.2007 Bulletin 2007/09**

(51) Int Cl.:
*F02D 41/40* *(2006.01)*   *F02D 41/02* *(2006.01)*

(21) Application number: **04016148.1**

(22) Date of filing: **08.07.2004**

(54) **Combustion control apparatus for internal combustion engine**

Steuergerät für die Verbrennung eines Verbrennungsmotors

Dispositif de commande de la combustion d'un moteur à combustion interne

(84) Designated Contracting States:
**DE FR GB**

(30) Priority: **31.07.2003 JP 2003284327**
**08.07.2003 JP 2003193310**

(43) Date of publication of application:
**12.01.2005 Bulletin 2005/02**

(73) Proprietor: **NISSAN MOTOR COMPANY, LIMITED**
**Yokohama-shi, Kanagawa 221-0023 (JP)**

(72) Inventors:
• **Nishizawa, Toru**
**Yokohama-shi**
**Kanagawa 236-0042 (JP)**
• **Kitahara, Yasuhisa**
**Yokohama-shi**
**Kanagawa 233-0001 (JP)**

(74) Representative: **Grünecker, Kinkeldey,**
**Stockmair & Schwanhäusser**
**Anwaltssozietät**
**Maximilianstrasse 58**
**80538 München (DE)**

(56) References cited:
**EP-A- 1 030 046**   **EP-A- 1 277 942**
**EP-A- 1 306 538**   **WO-A- 02/066813**
**US-A1- 2002 129 600**

• **PATENT ABSTRACTS OF JAPAN vol. 009, no. 060 (M-364), 16 March 1985 (1985-03-16) & JP 59 194020 A (NISSAN JIDOSHA KK), 2 November 1984 (1984-11-02)**
• **PATENT ABSTRACTS OF JAPAN vol. 011, no. 025 (M-556), 23 January 1987 (1987-01-23) & JP 61 197710 A (NISSAN MOTOR CO LTD), 2 September 1986 (1986-09-02)**

**EP 1 496 236 B1**

**Description**

BACKGROUND OF THE INVENTION

The present invention relates generally to control apparatuses for internal combustion engines, and more particularly to a combustion control apparatus for an internal combustion engine with an exhaust purifier such as a NOx trap and a particulate filter, which is configured to decrease an excess air ratio of the engine, and to raise an exhaust gas temperature of the engine, without increasing exhaust smoke.

In recent years, there have been disclosed various techniques of raising an exhaust gas temperature to activate an exhaust purifier for an engine with an exhaust purifier in an exhaust gas passage see e.g. WO 02/066813. A further technique is disclosed in Japanese Patent Provisional Publication No. 2000-320386, especially in paragraphs [0106] through [0111]. In this technique, a basic fuel injection quantity to produce a desired engine torque is calculated in accordance with an operating condition of the engine. The basic fuel injection quantity of fuel is supplied to a cylinder of the engine by multiple fuel injections near top dead center (TDC).

On the other hand, a known method of removing nitrogen oxides (NOx) from exhaust gas employs a NOx trap. The NOx trap traps NOx in oxidizing atmosphere and releases NOx in reducing atmosphere. The NOx trap also removes from exhaust gas and traps sulfur content in oxidizing atmosphere. Accordingly, a known method of releasing NOx and sulfur content trapped in NOx trap to regenerate the NOx trap is to decrease an excess air ratio to decrease an exhaust air-fuel ratio. In general, the exhaust gas temperature is raised to promote dissociation of sulfur content in addition to decreasing the exhaust air-fuel ratio, during the NOx trap releasing sulfur content.

SUMMARY OF THE INVENTION

However, the previously discussed technique is fraught with the following difficulty. The split fuel injection in the technique results in continuous combustion. In other words, a following fuel is injected into the flame produced by a preceding fuel injection. Accordingly, diffusive combustion process is predominant in the combustion produced by the second or later fuel injection. In diffusive combustion, decreasing excess air ratio leads to increasing exhaust smoke. Though this combustion control can raise the exhaust gas temperature, it has a difficulty of decreasing the excess air ratio in view of exhaust smoke. Therefore, this technique is not suitable for regeneration of a NOx trap that needs a decrease in the excess air ratio.

Accordingly, it is an object of the present invention to provide a combustion control apparatus for an internal combustion engine with an exhaust purifier such as a NOx trap and a particulate filter, which is configured to decrease an excess air ratio of the engine, and to raise an exhaust gas temperature of the engine, without increasing exhaust smoke.

In order to accomplish the aforementioned and other objects of the present invention, a combustion control apparatus for an internal combustion engine, comprises a combustion controlling actuator for causing combustion in a combustion chamber of the engine, a controller for controlling the combustion controlling actuator, and the controller configured to perform the following, switching a combustion mode between a normal combustion mode and a split retard combustion mode, producing an increase request for an increase in an exhaust gas temperature of the engine, in accordance with an operating condition of the engine, and performing the following in the normal combustion mode, producing normal combustion to generate an output torque of the engine, and performing the following in the split retard combustion mode in response to the increase request, producing preliminary combustion at or near top dead center, to release a predetermined quantity of heat in the combustion chamber, starting main combustion at a timing later than a start timing of the normal combustion in the normal combustion mode, after an end of the preliminary combustion, to generate the output torque of the engine, and producing a shift request for shifting a target exhaust gas temperature, in accordance with the operating condition of the engine, controlling an excess air ratio of the engine, to regulate the exhaust gas temperature in accordance with varying target exhaust gas temperature, in response to the shift request, and adjusting the start timing of the main combustion in accordance with a change in the excess air ratio.

According to another aspect of the invention, a combustion control apparatus for an internal combustion engine, comprises a fuel injector for injecting fuel directly into a combustion chamber of the engine, a controller for controlling the fuel injector, and the controller configured to perform the following, switching a combustion mode between a normal combustion mode and a split retard combustion mode, in accordance with an operating condition of the engine, producing an increase request for an increase in an exhaust gas temperature of the engine, in accordance with an operating condition of the engine, and performing the following in the normal combustion mode, controlling a normal fuel injection to produce normal combustion to generate an output torque of the engine, and performing the following in the split retard combustion mode in response to the increase request, controlling a first fuel injection to produce preliminary combustion at or near top dead center, to release a predetermined quantity of heat, starting a second fuel injection at a timing later than a start timing of the normal fuel injection in the normal combustion mode, to start main combustion after an end of the preliminary combustion, to generate the output torque of the engine, determining a first target exhaust gas temperature

2

and a second target exhaust gas temperature, producing a shift request for shifting a target exhaust gas temperature from the first target exhaust gas temperature to the second target exhaust gas temperature when a predetermined condition is satisfied, controlling an excess air ratio of the engine, to regulate the exhaust gas temperature from the first target exhaust gas temperature to the second target exhaust gas temperature, in response to the shift request, and adjusting the timing of the second fuel injection, in accordance with a change in the excess air ratio.

According to a further aspect of the invention, a combustion control apparatus for an internal combustion engine, comprises combustion controlling means for causing combustion in a combustion chamber of the engine, control means for controlling the combustion controlling means, and the control means configured to perform the following, switching a combustion mode between a normal combustion mode and a split retard combustion mode, producing an increase request for an increase in an exhaust gas temperature of the engine, in accordance with an operating condition of the engine, and performing the following in the normal combustion mode, producing normal combustion to generate an output torque of the engine, and performing the following in the split retard combustion mode in response to the increase request, producing preliminary combustion at or near top dead center, to release a predetermined quantity of heat in the combustion chamber, starting main combustion at a timing later than a start timing of the normal combustion in the normal combustion mode, after an end of the preliminary combustion, to generate the output torque of the engine, and producing a shift request for shifting a target exhaust gas temperature, in accordance with the operating condition of the engine, controlling an excess air ratio of the engine, to regulate the exhaust gas temperature in accordance with varying target exhaust gas temperature, in response to the shift request, and adjusting the start timing of the main combustion in accordance with a change in the excess air ratio.

According to another aspect of the invention, a method of controlling combustion for an internal combustion engine, comprises switching a combustion mode between a normal combustion mode and a split retard combustion mode, producing an increase request for an increase in an exhaust gas temperature of the engine, in accordance with an operating condition of the engine, and performing the following in the normal combustion mode, producing normal combustion to generate an output torque of the engine, and performing the following in the split retard combustion mode in response to the increase request, producing preliminary combustion at or near top dead center, to release a predetermined quantity of heat in the combustion chamber, starting main combustion at a timing later than a start timing of the normal combustion in the normal combustion mode, after an end of the preliminary combustion, to generate the output torque of the engine, and producing a shift request for shifting a target exhaust gas temperature, in accordance with the operating condition of the engine, controlling an excess air ratio of the engine, to regulate the exhaust gas temperature in accordance with varying target exhaust gas temperature, in response to the shift request, and adjusting the start timing of the main combustion in accordance with a change in the excess air ratio.

The above objects and other objects, features, and advantages of the present invention are readily apparent from the following detailed description of the best modes for carrying out the invention when taken in connection with the accompanying drawings.

## BRIEF DESCRIPTION OF THE SEVERAL VIEWS OF THE DRAWINGS

FIG. 1 is a schematic diagram depicting a diesel engine including a combustion control apparatus in accordance with an embodiment of the present invention.

FIG. 2 is a flow chart depicting a process of determining an operating mode of the engine in accordance with the embodiment of the present invention.

FIG. 3 is a representation of a map of a relationship among a threshold pressure Pe1 for determining the start of PM regeneration, an engine speed Ne, and a fuel injection quantity request Qfdrv.

FIG. 4A is a time chart of a fuel injection quantity in a normal combustion mode.

FIG. 4B is a time chart of a heat release rate in accordance with the fuel injection shown in FIG. 4A.

FIG. 5A is a time chart of the fuel injection quantity in a split retard combustion mode.

FIG. 5B is a time chart of the heat release rate in accordance with the fuel injection shown in FIG. 5A.

FIG. 6A is a representation of a table of a relationship between an exhaust gas temperature and a second fuel injection timing ITm in the split retard combustion mode.

FIG. 6B is a representation of a table of a relationship between a smoke quantity and second fuel injection timing ITm in the split retard combustion mode.

FIG. 6C is a representation of a table of a relationship between a CO quantity and second fuel injection timing ITm in the split retard combustion mode.

FIG. 6D is a representation of a table of a relationship between a HC quantity and second fuel injection timing ITm in the split retard combustion mode.

FIG. 7A is a time chart of the fuel injection quantity in the split retard combustion mode under a low load condition.

FIG. 7B is a time chart of the heat release rate in accordance with the fuel injection shown in FIG. 7A.

FIG. 8 is a flow chart depicting a process of determining fuel injection quantities for the split retard combustion mode in accordance with the embodiment of the present invention.

FIG. 9 is a representation of a map of a relationship among an accelerator opening APO, engine speed Ne, and a second fuel injection quantity Qm.

FIG. 10 is a representation of a map of a relationship among a first fuel injection quantity Qp, engine speed Ne, and second fuel injection quantity Qm.

FIG. 11 is a flow chart depicting a process of PM regeneration in accordance with the embodiment of the present invention.

FIG. 12 is a flow chart depicting a process of controlling the exhaust gas temperature in the process of PM regeneration shown in FIG. 11.

FIG. 13 is a representation of a table of a relationship between a PM quantity PMQ and a target excess air ratio in PM regeneration t$\lambda$reg in accordance with the embodiment of the present invention.

FIG. 14 is a representation of a map of a relationship among a reference intake air quantity tQac0, engine speed Ne, and second fuel injection quantity Qm in accordance with the embodiment of the present invention.

FIG. 15 is a representation of a map of a relationship among a first fuel injection timing ITp, the engine speed Ne, and second fuel injection quantity Qm in accordance with the embodiment of the present invention.

FIG. 16 is a representation of a map of a relationship among a second fuel injection timing ITm, engine speed Ne, and second fuel injection quantity Qm in accordance with the embodiment of the present invention.

FIG. 17 is a representation of a map of a relationship among a second fuel injection timing adjustment $\Delta$ITm, a target exhaust gas temperature tTexh, and excess air ratio $\lambda$ in accordance with the embodiment of the present invention.

FIG. 18 is a representation of a table of a relationship between a fuel injection quantity adjustment factor Ktr1 and second fuel injection timing ITm in accordance with the embodiment of the present invention.

FIG. 19 is a representation of a table of a relationship between a fuel injection quantity adjustment factor Ktr2 and target excess air ratio t$\lambda$ in accordance with the embodiment of the present invention.

FIG. 20 is a flow chart depicting a process of S regeneration in accordance with the embodiment of the present invention.

FIG. 21 is a flow chart depicting a process of controlling the exhaust gas temperature in the process of S regeneration shown in FIG. 20.

FIG. 22 is a flow chart depicting a process of NOx regeneration in accordance with the embodiment of the present invention.

FIG. 23 is a flow chart depicting a process of avoiding damage in the exhaust purifier in accordance with the embodiment of the present invention.

FIG. 24 is a representation of a map of a relationship among a target intake air quantity in breakdown avoidance mode tQacrec, engine speed Ne, and a main fuel injection quantity Qmain in accordance with the embodiment of the present invention.

FIG. 25 is a flow chart depicting a first process of setting operating mode flags in accordance with the embodiment of the present invention.

FIG. 26 is a representation of a map of a split retard combustion region in which the split retard combustion mode can be employed in accordance with the embodiment of the present invention.

FIG. 27 is a flow chart depicting a second process of setting operating mode flags in accordance with the embodiment of the present invention.

FIG. 28 is a flow chart depicting a third process of setting operating mode flags in accordance with the embodiment of the present invention.

FIG. 29 is a flow chart depicting a process of setting a PM regeneration request flag rqREG in accordance with the embodiment of the present invention.

FIG. 30 is a flow chart depicting a process of setting a S regeneration request flag rqDESUL in accordance with the embodiment of the present invention.

FIG. 31 is a flow chart depicting a process of setting a NOx regeneration request flag rqSP in accordance with the embodiment of the present invention.

FIG. 32 is a flow chart depicting a process of rapid activation of the exhaust purifier in accordance with the embodiment of the present invention.

DETAILED DESCRIPTION OF THE INVENTION

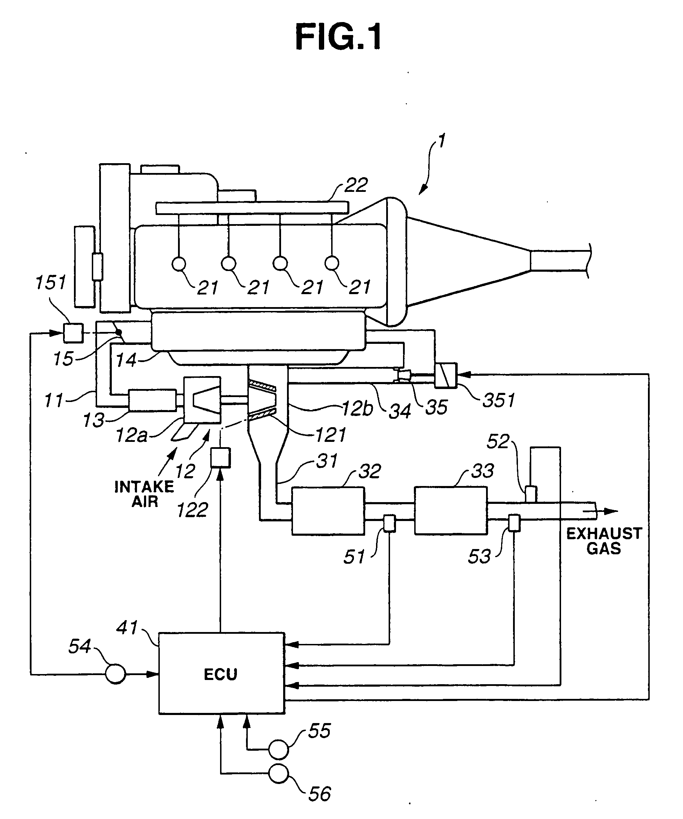

Referring now to FIG. 1, there is shown a diesel engine including a combustion control apparatus in accordance with an embodiment of the present invention. Intake air flows through an air cleaner (not shown) disposed at the inlet of an intake air passage 11. The air cleaner removes dust articles from intake air. In intake air passage 11 is disposed a compressor 12a of a variable nozzle turbocharger 12, which compresses intake air. Downstream from compressor 12a is disposed an intercooler 13, which cools the compressed intake air. After cooled, intake air flows into a serge tank 14. Serge tank 14 includes a manifold section for distributing intake air to cylinders. Upstream to serge tank 14 is disposed a throttle valve 15, which varies the airflow quantity of intake air. Throttle valve 15A is connected to a throttle actuator 151 for regulating the opening thereof.

In the cylinder head of engine 1 is disposed a fuel injector 21 in each cylinder. Discharged from a fuel pump (not shown), fuel is supplied to fuel injector 21 via a common rail 22. Fuel injector 21 injects fuel directly into each combustion chamber. Fuel injector 21 is capable of injecting fuel in multiple timings in one stroke. Engine 1 is normally operated in a normal combustion mode in a normal operating mode. In the normal combustion mode, fuel injector 21 performs a main fuel injection for producing engine output torque and a pilot fuel injection prior to the main fuel injection.

Exhaust gas flows in an exhaust gas passage 31. Downstream from an exhaust manifold is disposed a turbine 12b of turbocharger 12. Turbine 12b rotates compressor 12a, driven by exhaust gas. Turbine 12b includes a movable vane 121. Movable vane 121 is connected to a vane actuator 122 for regulating the angle thereof. Downstream from turbine 12b is disposed a NOx trap 32, downstream from which is disposed a particulate filter such as a diesel particulate filter (DPF) 33. NOx trap 32 has different functions in accordance with an exhaust air-fuel ratio. That is, NOx trap 32 removes from exhaust gas and traps NOx during the exhaust air-fuel ratio being low or exhaust gas being lean in fuel. On the other hand, NOx trap 32 releases NOx during the exhaust air-fuel ratio being high or exhaust gas being rich in fuel. NOx released from NOx trap 32 is purified by a reducing agent such as hydrocarbon (HC) in exhaust gas. In addition to NOx, NOx trap 32 removes from exhaust gas and traps sulfur content (S). NOx trap 32 has a function of oxidizing HC and carbon monoxide (CO), in addition to the function of purifying NOx. DPF 33 includes a porous filter element as formed of ceramic. The filter element of DPF 33 filters exhaust gas to remove exhaust particulate matter. NOx trap 32 and DPF 33 serves for an exhaust purifier to trap substances in exhaust gas.

Between intake air passage 11 and exhaust gas passage 31 is disposed an EGR pipe 34. Within EGR pipe 34 is disposed an EGR valve 35. EGR valve 35 is connected to an EGR actuator 351 to regulate the opening of EGR valve 35. In exhaust gas passage 31, a pressure sensor 51 is disposed between NOx trap 32 and DPF 33, for sensing an exhaust gas pressure Pexh of exhaust gas. Downstream from DPF 33 are disposed an oxygen sensor 52 and a temperature sensor 53. Oxygen sensor 52 senses an excess air ratio $\lambda$. Temperature sensor 53 senses an exhaust gas temperature. The detected exhaust gas temperature is used for estimating a bed temperature of NOx trap 32 (NOx trap temperature) Tnox and a bed temperature of DPF 33 (DPF temperature) Tdpf. NOx trap temperature Tnox and DPF temperature Tdpf may be sensed directly by temperature sensors disposed at NOx trap 32 and DPF 33. The engine system includes an air flow meter 54, a crank angle sensor 55, and an accelerator opening sensor 56. The sensors as a condition sensor collects information needed to determine the operating condition of the engine, and outputs signals to a controller such as an electric control unit (ECU) 41. ECU 41 determines or calculates an intake air quantity Qac, an engine speed Ne, and an accelerator opening APO, based on the signals from air flow meter 54, crank angle sensor 55, and accelerator opening sensor 56, respectively. ECU 41 executes a routine including the above-discussed calculation, and issues commands to a combustion controlling actuator including fuel injector 21, vane actuator 122, throttle actuator 151, and EGR actuator 351.

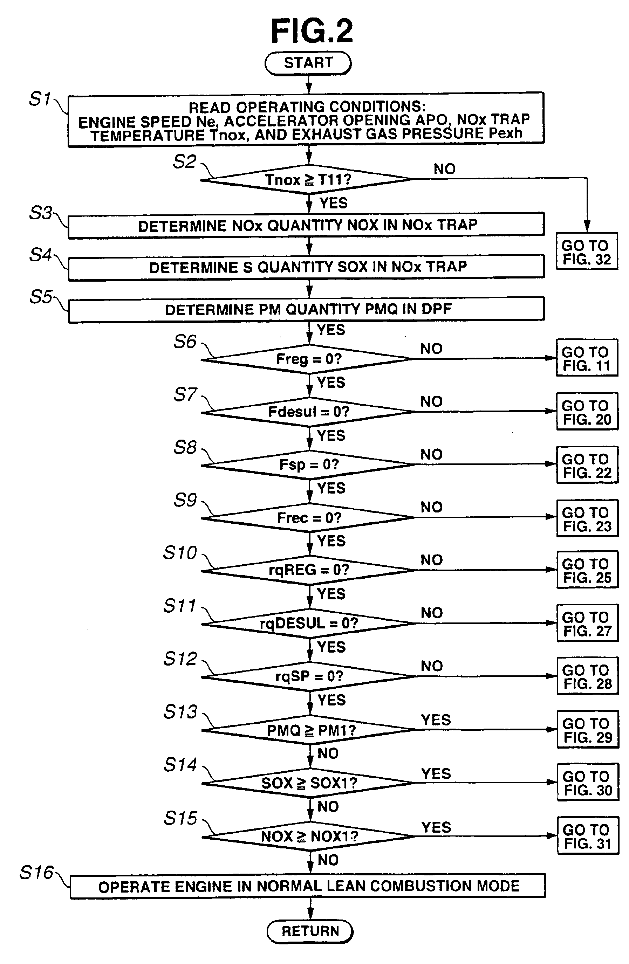

The following describes operations of ECU 41. PM regeneration indicates an operation to release PM from DPF 33. NOx regeneration indicates an operation to release NOx from NOx trap 32. S regeneration indicates an operation to release sulfur content from NOx trap 32. Referring now to FIG. 2, there is shown a flow chart depicting a process of determining an operating mode of the engine in accordance with the embodiment of the present invention. ECU 41 switches the combustion mode in accordance with the operating mode.

At step S1, ECU 41 reads engine speed Ne, accelerator opening APO, NOx trap temperature Tnox, and exhaust gas pressure Pexh.

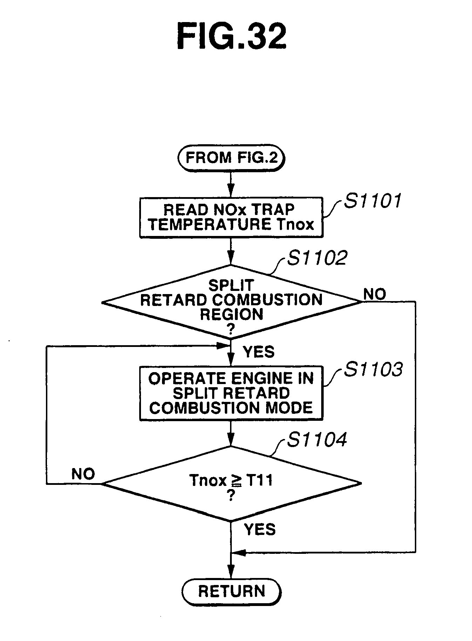

At step S2, a check is made to determine whether NOx trap 32 is activated or not. Actually, it is determined whether or not NOx trap temperature Tnox is higher than or equal to a predetermined threshold temperature T11. When the answer to step S2 is YES, the routine proceeds to step S3. On the other hand, when the answer to step S2 is NO, the routine proceeds to a routine shown in FIG. 32. Temperature T11 is an activation temperature at which NOx trap 32 is activated.

At step S3, ECU 41 determines a trapped quantity of NOx (NOx quantity NOX). NOx quantity NOX, which is a quantity of NOx trapped in NOx trap 32, is calculated based on engine speed Ne from the following equation (1).

$$NOX = NOX_{n-1} + Ne \cdot \Delta t \qquad (1)$$

where a variable including a numerical subscript n-1 indicates a value calculated in the preceding execution, $\Delta t$ indicates a time interval of a series of execution of the routine. Alternatively, NOx quantity NOX may be estimated by adding up a predetermined quantity for each predetermined distance traveled.

At step S4, ECU 41 determines a trapped quantity of S (S quantity SOX). S quantity SOX, which is a quantity of NOx trapped in NOx trap 32, is calculated based on engine speed Ne from the following equation (2), as in the case of NOx quantity NOX.

$$SOX = SOX_{n-1} + Ne \cdot \Delta t \qquad\qquad (2)$$

At step S5, ECU 41 determines a particulate matter (PM) accumulation quantity PMQ. PM quantity PMQ, which is a quantity of PM accumulated in DPF 33, is estimated based on exhaust gas pressure Pexh upstream to DPF 33. Alternatively, PM quantity PMQ may be estimated by calculating and adding up a PM quantity per unit time, based on engine speed Ne and/or a traveled distance.

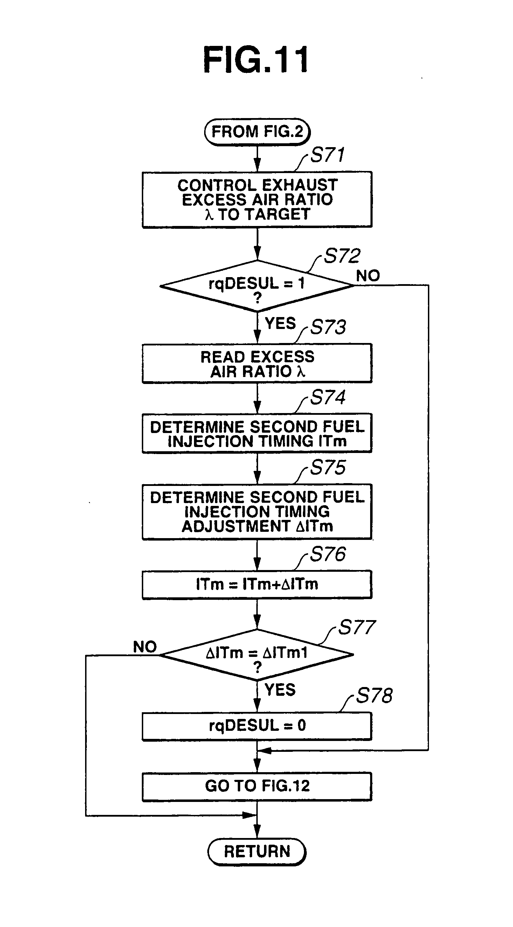

At step S6, a check is made to determine whether or not a PM regeneration flag Freg is equal to zero. PM regeneration flag Freg is reset to zero during the normal operating mode. When the answer to step S6 is YES, the routine proceeds to step S7. On the other hand, when the answer to step S6 is NO, the routine proceeds to a routine shown in FIG. 11.

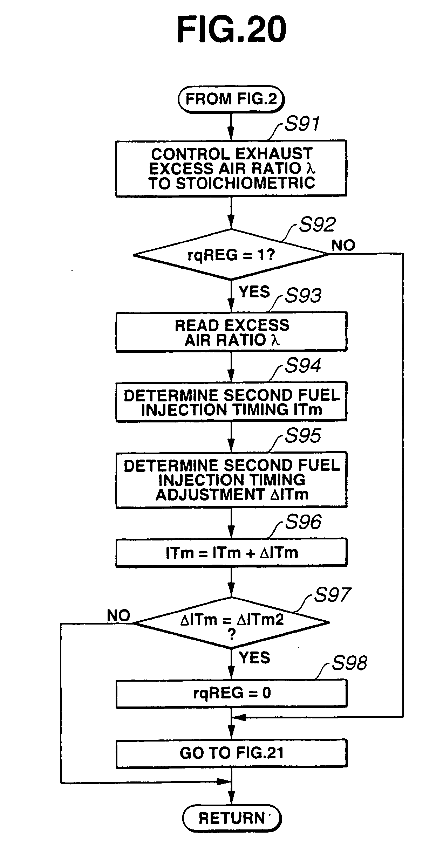

At step S7, a check is made to determine whether or not an S regeneration flag Fdesul is equal to zero. S regeneration flag Fdesul is reset to zero during the normal operating mode. When the answer to step S7 is YES, the routine proceeds to step S8. On the other hand, when the answer to step S7 is NO, the routine proceeds to a routine shown in FIG. 20.

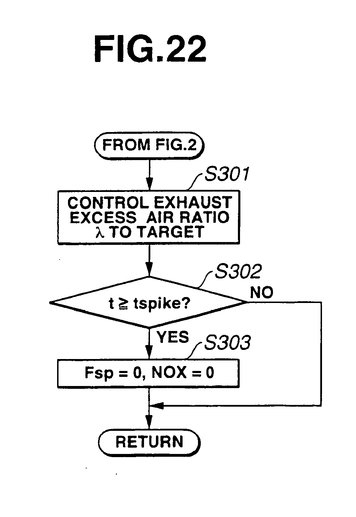

At step S8, a check is made to determine whether or not a NOx regeneration flag Fsp is equal to zero. NOx regeneration flag Fsp is reset to zero during the normal operating mode. When the answer to step S8 is YES, the routine proceeds to step S9. On the other hand, when the answer to step S8 is NO, the routine proceeds to a routine shown in FIG. 22.

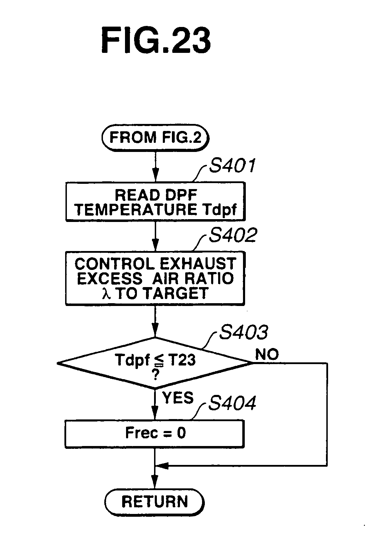

At step S9, a check is made to determine whether or not a breakdown avoidance flag Frec is equal to zero. Breakdown avoidance flag Frec is reset to zero during the normal operating mode, and temporarily set to 1 just after PM regeneration or S regeneration is discontinued. When the answer to step S9 is YES, the routine proceeds to step S10. On the other hand, when the answer to step S9 is NO, the routine proceeds to a routine shown in FIG. 23.

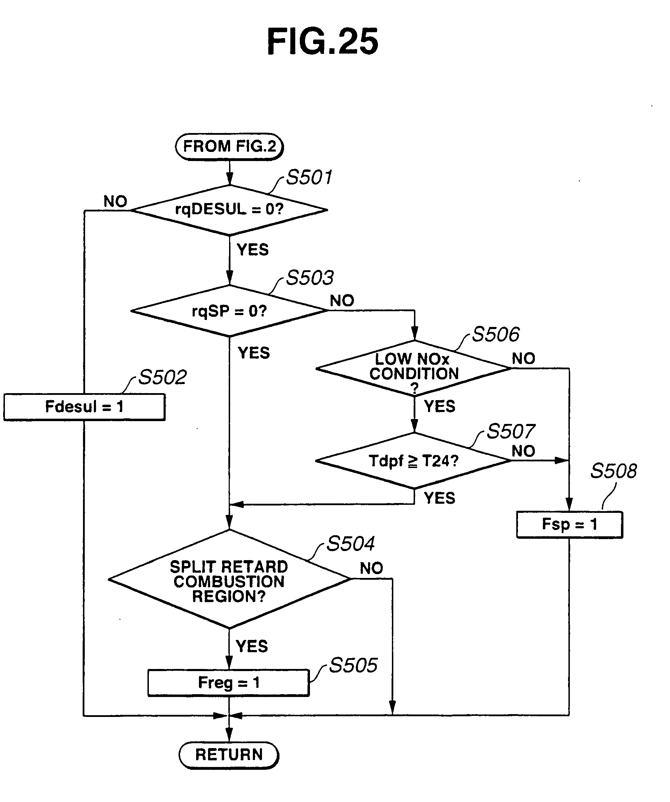

At step S10, a check is made to determine whether or not a PM regeneration request flag rqREG is equal to zero. PM regeneration request flag rqREG is reset to zero during the normal operating mode, and set to 1 when PM regeneration is desired in accordance with PM quantity PMQ. When the answer to step S10 is YES, the routine proceeds to step S11. On the other hand, when the answer to step S10 is NO, the routine proceeds to a routine shown in FIG. 25.

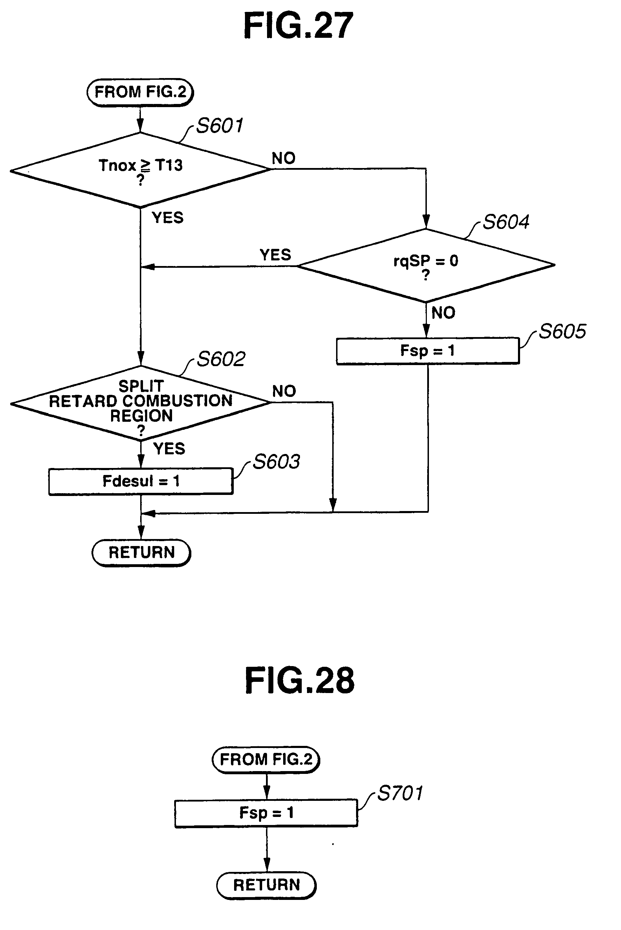

At step S11, a check is made to determine whether or not an S regeneration request flag rqDESUL is equal to zero. S regeneration request flag rqDESUL is reset to zero during the normal operating mode, and set to 1 when S regeneration is desired in accordance with S quantity SOX. When the answer to step S11 is YES, the routine proceeds to step S12. On the other hand, when the answer to step S11 is NO, the routine proceeds to a routine shown in FIG. 27.

At step S12, a check is made to determine whether or not a PM regeneration request flag rqREG is equal to zero. PM regeneration request flag rqREG is reset to zero during the normal operating mode, and set to 1 when NOx regeneration is desired in accordance with NOx quantity NOX. When the answer to step S12 is YES, the routine proceeds to step S13. On the other hand, when the answer to step S12 is NO, the routine proceeds to a routine shown in FIG. 28. At step S701 in FIG. 28, NOx regeneration flag Fsp is set to 1.

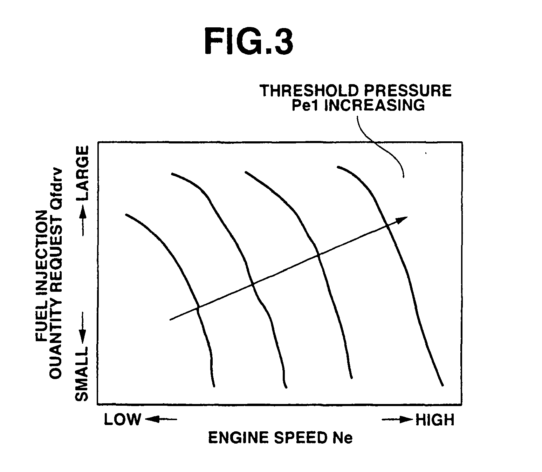

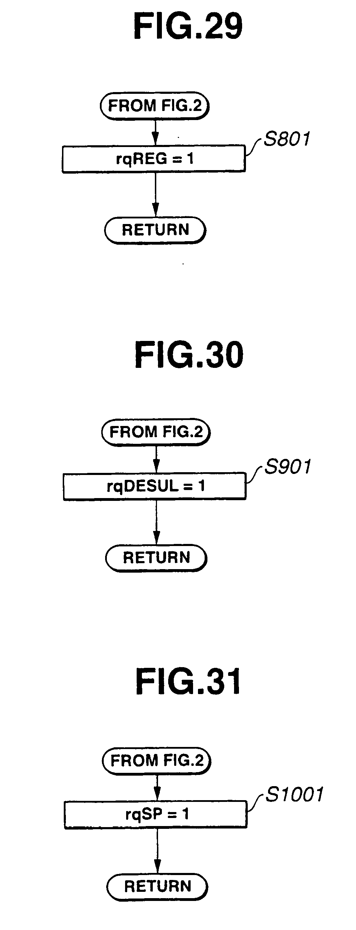

At step S13, a check is made to determine whether or not PM regeneration is desired. That is, it is determined whether or not PM quantity PMQ is larger than or equal to a predetermined threshold quantity PM1. An exhaust gas pressure Pe1 corresponding to threshold quantity PM1 is determined in accordance with the operating condition. Actually, exhaust gas pressure Pexh detected by pressure sensor 51 is compared with pressure Pe1. Pressure Pe1 is calculated or retrieved from a map as shown in FIG. 3 as a function of engine speed Ne and fuel injection quantity request Qfdrv. Threshold pressure Pe1 increases with increasing engine speed Ne and increasing fuel injection quantity request Qfdrv. Fuel injection quantity request Qfdrv indicates a fuel quantity supplied with main fuel injection in the normal combustion mode (main fuel injection quantity) Qmain, and indicates a fuel quantity supplied with second fuel injection in a split retard combustion mode (second fuel injection quantity) Qm, as below discussed. When the answer to step S13 is YES, the routine proceeds to a routine shown in FIG. 29. At step S801 in FIG. 29, PM regeneration request flag rqREG is set to 1. On the other hand, when the answer to step S13 is NO, the routine proceeds to step S14. Alternatively, the traveled distance after the last process of PM regeneration may be calculated for the determination of PM regeneration request flag rqREG. In this case, PM regeneration request flag rqREG is set to 1 when the traveled distance after the last process of PM regeneration reaches a predetermined distance. This prevents potential redundant execution of PM regeneration.

At step S14, a check is made to determine whether or not S regeneration is desired. That is, it is determined whether or not S quantity SOX is larger than or equal to a predetermined threshold quantity SOX1. When the answer to step S14 is YES, the routine proceeds to a routine shown in FIG. 30. At step S901 in FIG. 30, S regeneration request flag rqDESUL is set to 1. On the other hand, when the answer to step S14 is NO, the routine proceeds to step S15.

At step S15, a check is made to determine whether or not NOx regeneration is desired. That is, it is determined whether or not NOx quantity NOX is larger than or equal to a predetermined threshold quantity NOX1. When the answer to step S15 is YES, the routine proceeds to a routine shown in FIG. 31. At step S1001 in FIG. 30, NOx regeneration request flag rqSP is set to 1. On the other hand, when the answer to step S15 is NO, the routine proceeds to step S16.

Regeneration request flags reREG, reDESUL, and reSP are each reset to zero, when engine 1 is turned on.

At step S16, ECU 41 operates engine 1 in the normal lean combustion mode (normal combustion mode). On the other hand, ECU 41 shifts the combustion mode to the split retard combustion mode, in case the routine proceeding from step S2 to the routine in FIG. 32 to activate NOx trap 32, in case the routine proceeding from step S6 to the routine in FIG. 11 to perform PM regeneration, in case the routine proceeding from step S7 to the routine in FIG. 20 to perform S regeneration, and in case the routine proceeding from step S8 to the routine in FIG. 22 to perform NOx regeneration.

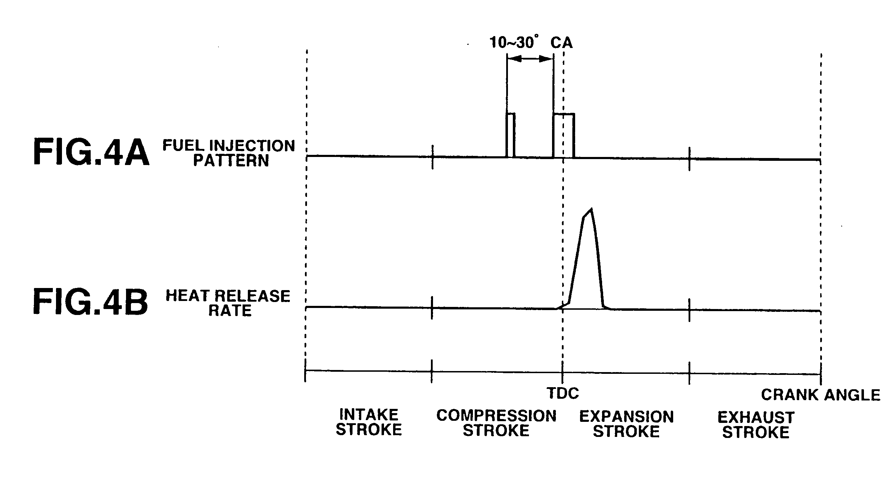

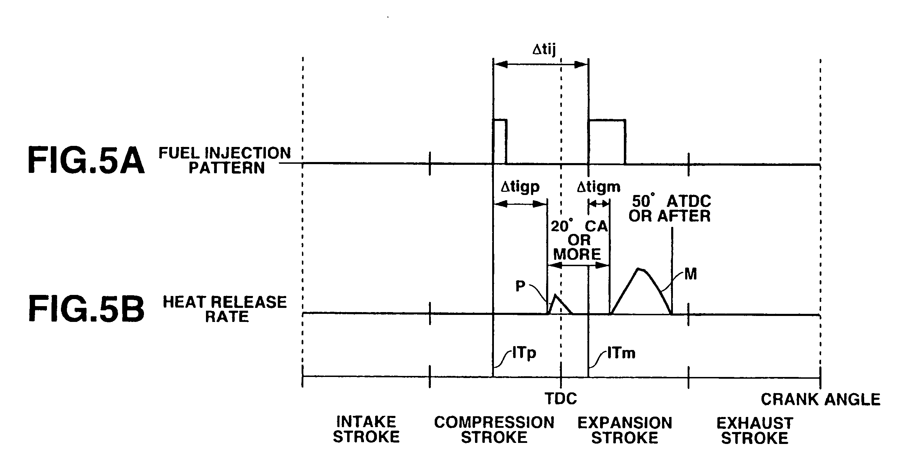

The following describes the combustion modes in detail. Referring now to FIGs. 4A to 5B, there are shown a fuel injection pattern and a heat release rate in each combustion mode. FIGs. 4A and 4B show the normal combustion mode. FIGs. 5A and 5B show the split retard combustion mode. In the normal combustion mode, a pilot fuel injection and a main fuel injection are performed under a regular operating condition. The pilot fuel injection is executed between 40-10°CA before top dead center (BTDC). The fuel quantity per stroke is set to 1-3mm$^3$. Following the pilot fuel injection, the main fuel injection is executed between 10°BTDC and 20° after top dead center (ATDC). The time interval between timings (start timings) of the pilot fuel injection and the main fuel injection is set between 10-30°CA.

As shown in FIGs. 5A and 5B, two fuel injections are employed in the split retard combustion mode. In the split retard combustion mode, a first fuel injection is executed in compression stroke, and a second fuel injection is executed in expansion stroke. The first fuel injection produces preliminary combustion at or near TDC to release heat quantity P, so as to raise an incylinder temperature at TDC of compression stroke (compression end temperature). The fuel quantity by the first fuel injection (first fuel injection quantity) Qp is determined so as to produce a recognizable heat release quantity. First fuel injection quantity Qp desired varies in accordance with the operating condition of the engine system. After an end of the preliminary combustion, the second fuel injection is executed so that main combustion produces engine output torque. The main combustion releases heat quantity M. A time interval Δtij between the start timing of first fuel injection (first fuel injection timing) ITp and the start timing of second fuel injection (second fuel injection timing) ITm is determined based on engine speed Ne, so that a time interval between the start timing of preliminary combustion and the start timing of main combustion is longer than or equal to 20°CA. Since the main combustion takes place in expansion stroke, the duration of the burning process of the main combustion is extended so that the end timing of the burning process is after 50°ATDC. The preliminary combustion or the heat release of the preliminary combustion starts an ignition lag Δtigp after the start of the first fuel injection. The main combustion or the heat release of the main combustion starts an ignition lag Δtigm after the start of the second fuel injection.

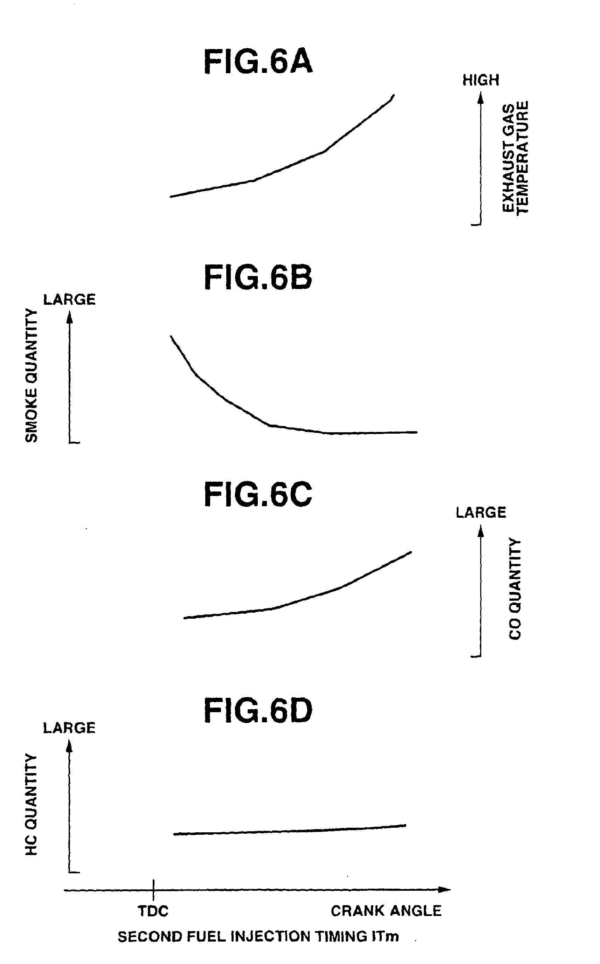

Referring now to FIGs. 6A through 6D, there are shown effects produced by the split retard combustion, with reference to second fuel injection timing ITm. Excess air ratio λ is held constant. In the split retard combustion mode, the exhaust gas temperature increases with retarding second fuel injection timing ITm, as shown in FIG. 6A. The time interval Δtij between first fuel injection timing ITp and second fuel injection timing ITm is adjusted to ensure the time interval between the end timing of the preliminary combustion and the start timing of the main combustion. Performing the second fuel injection after the end of the preliminary combustion ensures a time period longer than ignition lag Δtigm between the end timing of the preliminary combustion and the start timing of the main combustion. This increases the proportion of premixed combustion in the main combustion. During regenerating the exhaust purifier, for example, during S regeneration for NOx trap 32, the exhaust gas temperature is raised to a high temperature desired for activating NOx trap 32, and excess air ratio λ is decreased without increasing exhaust smoke. As shown in FIGs. 6A and 6B, the exhaust gas temperature rises and the quantity of exhaust smoke decreases with retarding second fuel injection timing ITm. In general, the exhaust air-fuel ratio is reduced by decreasing the intake air quantity, which tends to produce an unstable process of combustion. However, in the shown embodiment, the preliminary combustion increases compression end temperature to allow a stable process of the main combustion. In the split retard combustion mode, the HC quantity remains below a low level, little depending on second fuel injection timing ITm.

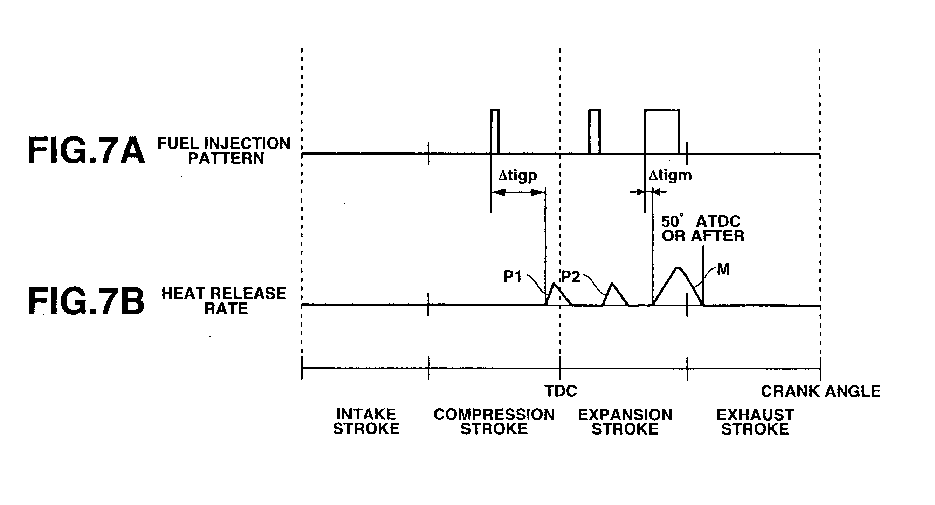

Under low load conditions, the exhaust gas temperature is inherently low. Accordingly, it is necessary to raise the exhaust gas temperature greatly for obtaining a target temperature for PM regeneration or S regeneration. For raising the exhaust gas temperature, a main combustion timing (start timing of the main combustion) needs to be retarded more than in the normal split retard combustion mode. However, there is a possibility that a single process of the preliminary combustion is not enough to maintain the incylinder temperature above a desirable level for the main combustion. In such a case, in the split retard combustion mode, the preliminary combustion employs multiple burning processes, as shown in FIGs. 7A and 7B. The incylinder temperature is raised by the first process of preliminary combustion, and is maintained by the following process. Heat release P1, P2, and M are separated with no lap, to regulate the exhaust gas temperature to a target temperature without increasing exhaust smoke.

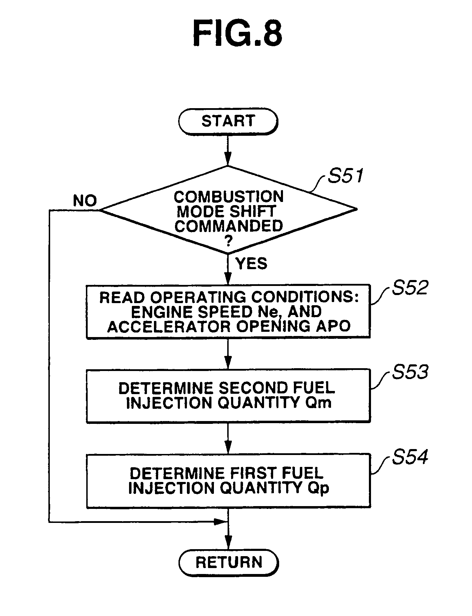

Referring now to FIG. 8, there is shown a flow chart depicting a process of determining fuel injection quantities for the split retard combustion mode. This routine is executed at the occasion of executing the split retard combustion. Actually, first fuel injection quantity Qp and fuel quantity by second fuel injection (second fuel injection quantity) Qm are determined.

At step S51, a check is made to determine whether or not combustion mode shift is commanded. ECU 41 issues the command of shifting the combustion mode in cases of activating NOx trap 32, PM regeneration, S regeneration, and NOx regeneration. When the answer to step S51 is YES, the routine proceeds to step S52. On the other hand, when the answer to step S51 is NO, the routine returns.

At step S52, ECU 41 reads engine speed Ne and accelerator opening APO. Next, the routine proceeds to step S53.

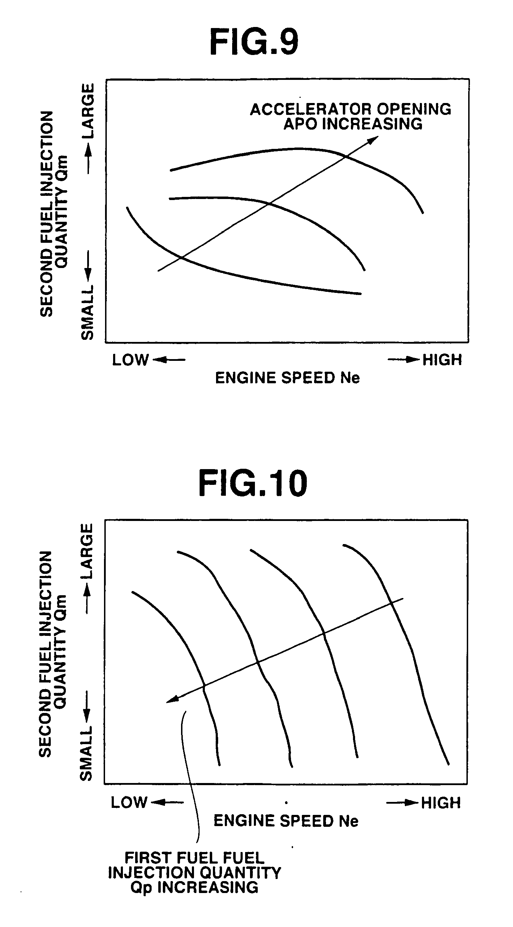

At step S53, ECU 41 determines second fuel injection quantity Qm. Second fuel injection quantity Qm is calculated or retrieved from a map as shown in FIG. 9 as a function of engine speed Ne and accelerator opening APO. With engine speed Ne held constant, second fuel injection quantity Qm increases with increasing accelerator opening APO.

At step S54, ECU 41 determines first fuel injection quantity Qp. First fuel injection quantity Qp is calculated or retrieved from a map as shown in FIG. 10 as a function of engine speed Ne and second fuel injection quantity Qm. First fuel injection quantity Qp increases with decreasing engine speed Ne and decreasing second fuel injection quantity Qm.

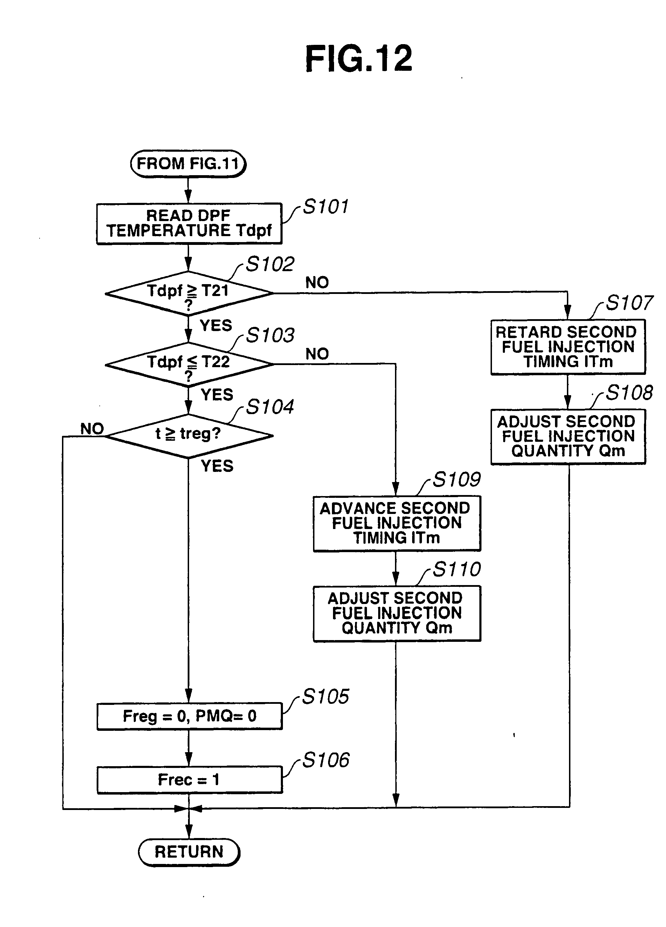

Referring now to FIGs. 11 and 12, there is shown a flow chart of a process of PM regeneration. This routine is executed when the answer to step S6 in FIG.2 is NO, that is, when PM regeneration flag Freg is set to 1. PM regeneration is implemented by raising the exhaust gas temperature to burn particulate matter in DPF 33. Accordingly, the engine system is operated in the split retard combustion mode. Second fuel injection timing ITm is controlled to raise the exhaust gas temperature and to raise DPF temperature up to a temperature at which PM is burned, such as 600°C in the shown embodiment. This routine determines first fuel injection timing ITp and second fuel injection timing ITm.

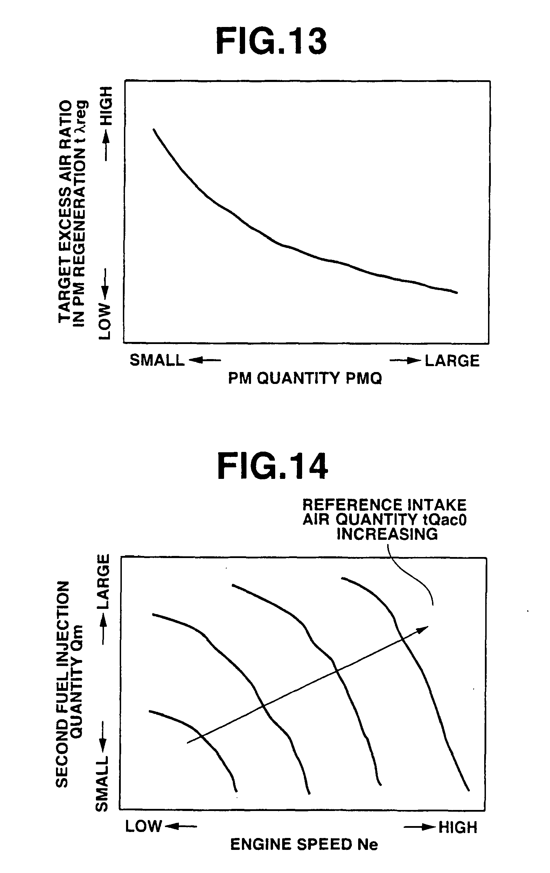

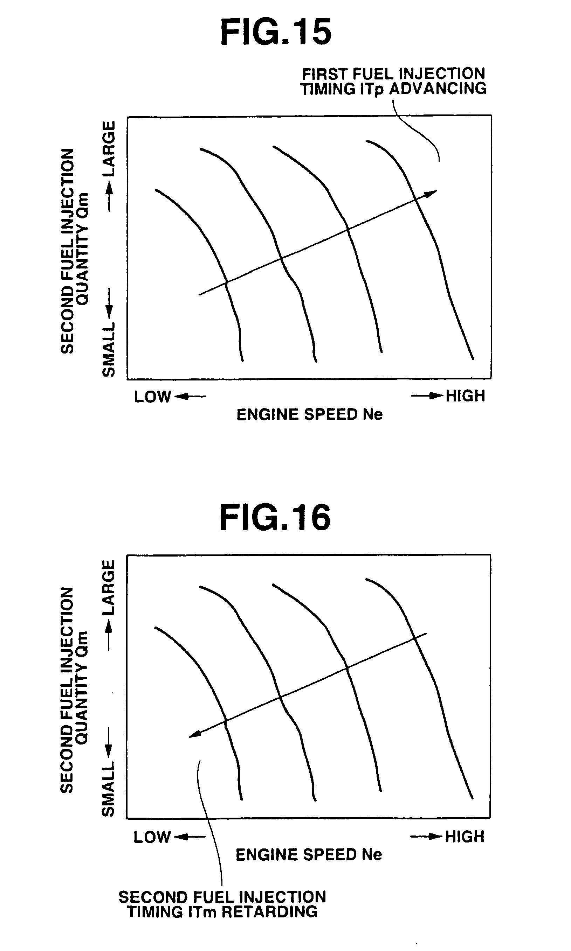

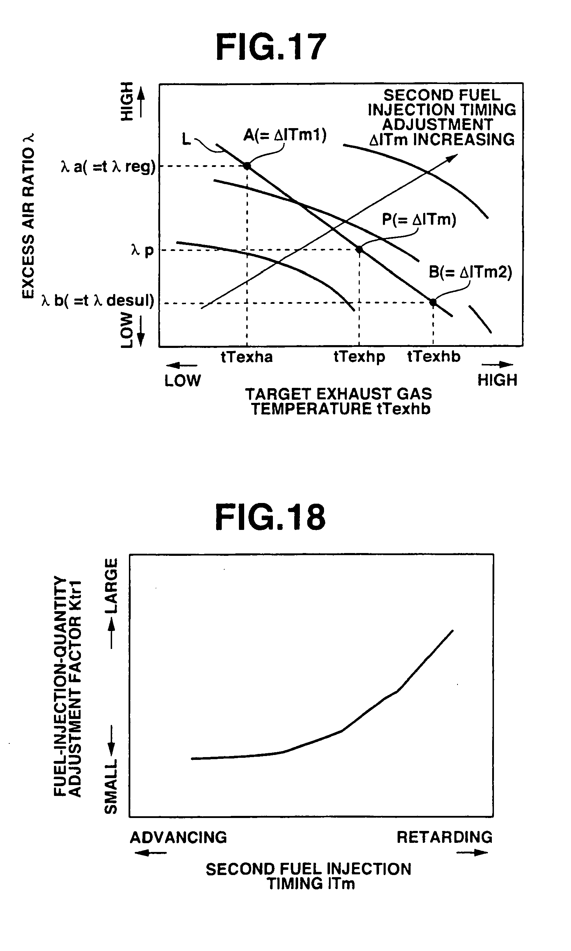

At step S71, ECU 41 controls excess air ratio λ to target excess air ratio tλ, which is determined in accordance with PM quantity PMQ in DPF 33. Excess air ratio λ is controlled by actuating throttle valve 15 and EGR valve 35. A target excess air ratio in PM regeneration tλreg is calculated or retrieved from a table as shown in FIG. 13 as a function of PM quantity PMQ. Target excess air ratio tλreg decreases with increasing PM quantity PMQ. Target excess air ratio tλreg is generally within a rage from 1 to 1.4, in the shown embodiment. Reference intake air quantity tQac0, which is corresponding to the stoichiometric air excess ratio, is calculated or retrieved from a map as shown in FIG. 14 as a function of engine speed Ne and second fuel injection quantity Qm. Reference intake air quantity tQac0 increases with increasing engine speed Ne and increasing second fuel injection quantity Qm. Reference intake air quantity tQac0 is multiplied by target excess air ratio tλreg to produce a target intake air quantity tQac (tQac = tQac0 x tλreg). ECU 41 controls throttle valve 15 in accordance with target intake air quantity tQac. The difference between an actual excess air ratio and target excess air ratio tλreg is determined based on a feedback signal from oxygen sensor 52. ECU 41 controls EGR valve 35 to reduce the difference. As discussed above, PM quantity PMQ is estimated based on exhaust gas pressure Pexh. First fuel injection timing ITp is calculated or retrieved from a map as shown in FIG. 15 as a function of engine speed Ne and second fuel injection quantity Qm. First fuel injection timing ITp is advanced with increasing engine speed Ne and increasing second fuel injection quantity Qm. Second fuel injection timing ITm is calculated or retrieved from a map as shown in FIG. 16 as a function of engine speed Ne and second fuel injection quantity Qm. Second fuel injection timing ITm is retarded with decreasing engine speed Ne and decreasing second fuel injection quantity Qm. In addition, second fuel injection timing ITm is adjusted in accordance with the exhaust gas temperature and the excess air ratio. A second fuel injection timing adjustment ΔITm is calculated or retrieved from a map as shown in FIG. 17 as a function of target exhaust gas temperature tTexh and target excess air ratio tλ. In PM regeneration mode under consideration, second fuel injection timing adjustment ΔITm1 is derived based on target exhaust gas temperature tTexha and target excess air ratio tλreg. Second fuel injection timing ITm is further retarded with increasing target exhaust gas temperature tTexh and increasing target excess air ratio tλ.

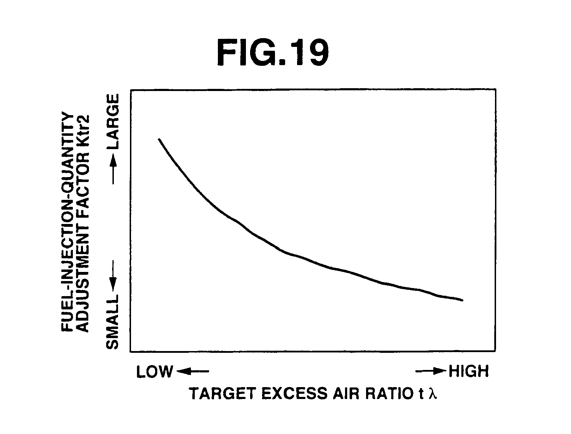

Thus, second fuel injection timing ITm is much later than the start timing of main fuel injection in the normal combustion mode. Accordingly, second fuel injection quantity Qm and target intake air quantity tQac are adjusted in accordance with second fuel injection timing ITm, to reduce a change of engine output torque in accordance with retarding second fuel injection timing ITm. A fuel injection quantity adjustment factor Ktr1 is calculated or retrieved from a table as shown in FIG. 18 as a function of second fuel injection timing ITm. Second fuel injection quantity Qm is multiplied by fuel injection quantity adjustment factor Ktr1 to produce an adjusted second fuel injection quantity Qm. Fuel injection quantity adjustment factor Ktr1 increases with retarding second fuel injection timing ITm. In addition, second fuel injection quantity Qm and target intake air quantity tQac are adjusted in accordance with target excess air ratio tλ to reduce an increase in pumping loss in accordance with decreasing excess air ratio. Second fuel injection quantity Qm is multiplied by fuel injection quantity adjustment factor Ktr2 to produce an adjusted second fuel injection quantity Qm. A fuel injection quantity adjustment factor Ktr2 is calculated or retrieved from a table as shown in FIG. 19 as a function of target excess air ratio tλ.

At step S72, a check is made to determine whether or not S regeneration request flag rqDESUL is equal to 1.

When the answer to step S72 is YES, the routine proceeds to step S73. On the other hand, when the answer to step S72 is NO, the routine proceeds to a process as shown in FIG. 12. Thus, steps S73 through S78 are executed, in case PM regeneration follows S regeneration.

At step S73, ECU 41 reads excess air ratio λ. Next, the routine proceeds to step S74.

At step S74, ECU 41 determines second fuel injection timing ITm based on a map as shown in FIG. 16, as above discussed.

At step S75, ECU 41 determines second fuel injection timing adjustment ΔITm. Points A (tTexha, λa; λa=tλreg) and B (tTexha, λb; λb=tλdesul) in the map shown in FIG. 17 are corresponding to PM regeneration mode and S regeneration mode, respectively. During transition from S regeneration mode to PM regeneration mode, ECU 41 continuously varies the operating state along a line L connecting points A and B. ECU 41 determines a point P (tTexhp, λp) corresponding to the current operating state in accordance with excess air ratio λ. Second fuel injection timing adjustment ΔITm is determined based on point P, and used to adjust second fuel injection timing ITm. In the shown embodiment, target exhaust gas temperatures tTexha, tTexhb are set to temperatures desired to heat DPF 33 up to 600°C, and NOx trap 32 up to 650°C, respectively.

At step S76, ECU 41 adds second fuel injection timing adjustment ΔITm and second fuel injection timing ITm to produce an adjusted second fuel injection timing ITm (ITm=ITm+ΔITm). Thus, second fuel injection timing ITm varies from second fuel injection timing in S regeneration ITm2 (=ITm+ΔITm2) to second fuel injection timing in PM regeneration mode ITm1 (=ITm+ΔITm1) with varying excess air ratio λ, during transition from S regeneration mode to PM regeneration mode.

At step S77, a check is made to determine whether or not second fuel injection timing adjustment ΔITm is equal to second fuel injection timing adjustment in PM regeneration mode ΔITm1. When the answer to step S77 is YES, the routine proceeds to step S78, at which S regeneration request flag rqDESUL is reset to zero, and next to a process as shown in FIG. 12. On the other hand, when the answer to step S77 is NO, the routine returns.

In the shown embodiment, target excess air ratio tλ is switched momentarily to target excess air ratio in PM regeneration mode tλreg, in response to the mode shift to PM regeneration mode. Therefore, actual excess air ratio λ is sensed and used to determine second fuel injection timing adjustment ΔITm. Alternatively, target excess air ratio tλ may be used to determine second fuel injection timing adjustment ΔITm. In this case, the change of target excess air ratio tλ is slowed in accordance with the responsibility of the operating state. This allows regarding target excess air ratio tλ as actual excess air ratio λ.

At step S101 in FIG. 12, ECU 41 reads DPF temperature Tdpf. Next, the routine proceeds to step S102.

At step S102, a check is made to determine whether DPF temperature Tdpf is enough to burn PM in DPF 33. Actually, it is determined whether or not DPF temperature Tdpf is higher than or equal to a predetermined threshold temperature T21 such as 600°C. When the answer to step S102 is YES, the routine proceeds to step S103. On the other hand, when the answer to step S102 is NO, the routine proceeds to step S107.

At step S107, ECU 41 retards second fuel injection timing ITm based on a map as shown in FIG. 16, to raise the exhaust gas temperature. Next, the routine proceeds to step S108.

At step S108, ECU 41 determines fuel injection quantity adjustment factor Ktr1 based on second fuel injection timing ITm determined through step S107, using a map as shown in FIG. 18. Second fuel injection quantity Qm is multiplied by fuel injection quantity adjustment factor Ktr1 to produce an adjusted second fuel injection quantity Qm. Next, the routine returns.

At step S103, a check is made to determine whether or not DPF temperature Tdpf is lower than or equal to a predetermined threshold temperature T22. Temperature T22 is set to a temperature below which thermal load applied to DPF 33 is within acceptable limits, such as 700°C. When the answer to step S103 is YES, the routine proceeds to step S104. On the other hand, when the answer to step S103 is NO, the routine proceeds to step S109.

At step S109, ECU 41 retards second fuel injection timing ITm based on a map as shown in FIG. 16, to raise the exhaust gas temperature. Next, the routine proceeds to step S110.

At step S110, ECU 41 determines fuel injection quantity adjustment factor Ktr1 based on second fuel injection timing ITm determined through S109, using a map as shown in FIG. 18. Second fuel injection quantity Qm is multiplied by fuel injection quantity adjustment factor Ktr1 to produce an adjusted second fuel injection quantity Qm. Next, the routine returns.

At step S104, a check is made to determine whether or not a predetermined time period treg is elapsed after the split retard combustion mode starts at step S107 or S109. When the answer to step S104 is YES, the routine proceeds to step S105. On the other hand, when the answer to step S104 is NO, the routine returns. PM is burned during DPF temperature Tdpf being held within the target range, that is, between temperatures T21 and T22.

At step S105, PM regeneration flag Freg is reset to zero, to switch the operating mode to the normal combustion mode. PM quantity PMQ is also reset to zero. Next, the routine proceeds to step S106.

At step S106, breakdown avoidance flag Frec is set to 1. With breakdown avoidance flag Frec set, the engine is operated preventing breakdown or overheating of DPF 33. If excess air ratio is immediately set to a normal value λ with part of PM unburned, there is a possibility that unburned PM is rapidly burned to impose a large heat load to DPF 33.

Referring now to FIG. 20, there is shown a flow chart depicting a process of S regeneration. S regeneration is implemented by controlling exhaust gas to fuel-rich condition to supply reducing agent to NOx trap 32, and by raising the exhaust gas temperature to promote dissociation of S. Actually, the engine is operated in the split retard combustion mode to execute S regeneration. In the shown embodiment, NOx trap 32 includes a catalyst of the Ba type. It is necessary to raise the catalyst over 650°C for S regeneration. This routine determines first fuel injection timing ITp and second fuel injection timing ITm.

At step S91, ECU 41 controls excess air ratio $\lambda$ to target excess air ratio t$\lambda$desul (=1, in the shown embodiment). Excess air ratio $\lambda$ is controlled by actuating throttle valve 15 and EGR valve 35. Reference intake air quantity tQac0, which is corresponding to the stoichiometric air excess ratio, is calculated or retrieved from a map as shown in FIG. 14 as a function of engine speed Ne and second fuel injection quantity Qm. Reference intake air quantity tQac (tQac = tQac0) increases with increasing engine speed Ne and increasing second fuel injection quantity Qm. ECU 41 controls throttle valve 15 in accordance with target intake air quantity tQac. First fuel injection timing ITp is calculated or retrieved from a map as shown in FIG. 15 as a function of engine speed Ne and second fuel injection quantity Qm. Second fuel injection timing ITm is determined using maps as shown in FIGs. 16 and 17. Fuel injection quantity adjustment factor Ktr1 and fuel injection quantity adjustment factor Ktr2 for reducing an increase in pumping loss are derived from tables as shown in FIGs. 18 and 19. Second fuel injection quantity Qm is multiplied by fuel injection quantity adjustment factor Ktr1 and fuel injection quantity adjustment factor Ktr2 to produce an adjusted second fuel injection quantity Qm.

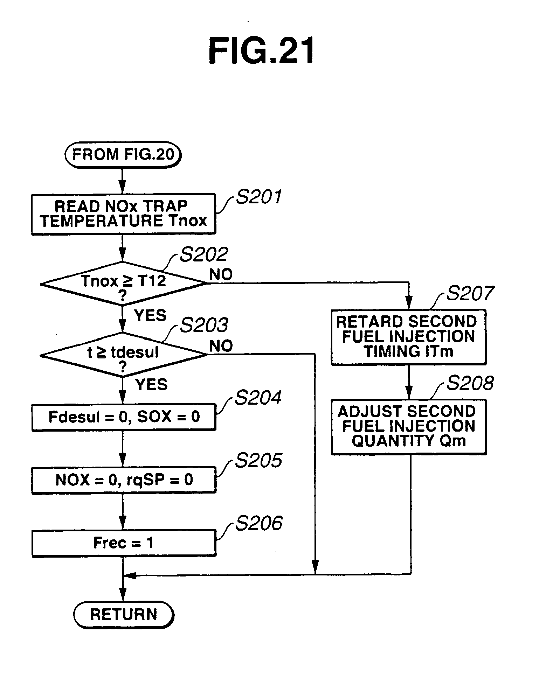

At step S92, a check is made to determine whether or not PM regeneration request flag rqREG is equal to 1. When the answer to step S92 is YES, the routine proceeds to step S93. On the other hand, when the answer to step S92 is NO, the routine proceeds to a process as shown in FIG. 21. Thus, steps S93 through S98 are executed in case S regeneration follows PM regeneration.

At step S93, ECU 41 reads excess air ratio $\lambda$. Next, the routine proceeds to step S94.

At step S94, ECU 41 determines second fuel injection timing ITm using a map as shown in FIG. 16. Next, the routine proceeds to step S95.

At step S95, ECU 41 determines second fuel injection timing adjustment $\Delta$ITm. Points A (tTexha, $\lambda$a; $\lambda$a=t$\lambda$reg) and B (tTexha, $\lambda$b; $\lambda$b=t$\lambda$desul) in the map shown in FIG. 17 are corresponding to PM regeneration mode and S regeneration mode, respectively. During transition from S regeneration mode to PM regeneration mode, ECU 41 continuously varies the operating state along a line L connecting points A and B. ECU 41 determines a point P (tTexhp, $\lambda$p) corresponding to the current operating state in accordance with excess air ratio $\lambda$. Second fuel injection timing adjustment $\Delta$ITm is determined based on point P, and used to adjust second fuel injection timing ITm. Next, the routine proceeds to step S96.

At step S96, ECU 41 adds second fuel injection timing adjustment $\Delta$ITm and second fuel injection timing ITm to produce an adjusted second fuel injection timing ITm (ITm=ITm+$\Delta$ITm). Next, the routine proceeds to step S97.

At step S97, a check is made to determine whether or not second fuel injection timing adjustment $\Delta$ITm is equal to second fuel injection timing adjustment in S regeneration mode $\Delta$ITm2. When the answer to step S97 is YES, the routine proceeds to step S98, at which PM regeneration request flag rqREG is reset to zero, and next to a process as shown in FIG. 21. On the other hand, when the answer to step S97 is NO, the routine returns.

At step S201 in FIG. 21, ECU 41 reads NOx trap temperature Tnox. Next, the routine proceeds to step S202.

At step S202, a check is made to determine whether or not NOx trap temperature Tnox is higher than or equal to a predetermined threshold temperature T12. Temperature T12 is set to a minimum temperature needed to dissociate S, such as 650°C. When the answer to step S202 is YES, the routine proceeds to step S203. On the other hand, when the answer to step S202 is NO, the routine proceeds to step S207.

At step S207, ECU 41 retards second fuel injection timing ITm based on a map as shown in FIG. 16, to raise the exhaust gas temperature. Next, the routine proceeds to step S208.

At step S208, ECU 41 determines fuel injection quantity adjustment factor Ktr1 based on second fuel injection timing ITm determined through step S207, using a map as shown in FIG. 18. Second fuel injection quantity Qm is multiplied by fuel injection quantity adjustment factor Ktr1 to produce an adjusted second fuel injection quantity Qm. Next, the routine returns.

At step S203, a check is made to determine whether or not a predetermined time period tdesul is elapsed after the split retard combustion mode starts at step S207. When the answer to step S203 is YES, the routine proceeds to step S204. On the other hand, when the answer to step S203 is NO, the routine returns. S is dissociated and released from NOx trap 32 during NOx trap temperature Tnox being held within the target range, that is, above T12. Released from NOx trap 32, S is purified by reducing agent in exhaust gas.

At step S204, S regeneration flag Fdesul is reset to zero, to switch the operating mode to the normal combustion mode. S quantity SOX is also reset to zero. Next, the routine proceeds to step S205.

At step S205, NOx quantity NOX is reset to zero, and NOx regeneration request flag rqSP reset to zero. Next, the routine proceeds to step S206.

At step S206, breakdown avoidance flag Frec is set to 1. With breakdown avoidance flag Frec set, the engine is operated preventing breakdown of DPF 33. If excess air ratio is immediately set to a normal value λ with PM partly unburned, there is a possibility that PM unburned is rapidly burned to impose a large heat load to DPF 33.

Referring now to FIG. 22, there is shown a flow chart depicting a process of NOx regeneration. NOx regeneration is implemented by controlling exhaust gas to fuel-rich condition to supply reducing agent to NOx trap 32. Actually, the engine is operated in the split retard combustion mode to execute NOx regeneration. In NOx regeneration, it is not desired to raise the exhaust gas temperature as in S regeneration. On the other hand, the intake air quantity is decreased in NOx regeneration, to decrease the exhaust air fuel ratio, which tends to decrease the compression end temperature. Therefore, the split retard combustion mode is employed for countering this difficulty. This routine determines first fuel injection timing ITp and second fuel injection timing ITm.

At step S301, ECU 41 controls excess air ratio λ to target excess air ratio tλsp, which is determined for NOx regeneration. Target excess air ratio tλsp is set to a value smaller than 1, such as 0.9, which indicates a fuel rich condition. Excess air ratio λ is controlled by actuating throttle valve 15 and EGR valve 35. Reference intake air quantity tQac0, which is corresponding to the stoichiometric air excess ratio, is calculated or retrieved from a map as shown in FIG. 14 as a function of engine speed Ne and second fuel injection quantity Qm. Reference intake air quantity tQac0 is multiplied by target excess air ratio tλsp to produce a target intake air quantity tQac (tQac = tQac0 x tλsp). ECU 41 controls throttle valve 15 in accordance with target intake air quantity tQac. The difference between an actual excess air ratio and target excess air ratio tλreg is determined based on a feedback signal from oxygen sensor 52. ECU 41 controls EGR valve 35 to reduce the difference. First fuel injection timing ITp is calculated or retrieved from a map as shown in FIG. 15 as a function of engine speed Ne and second fuel injection quantity Qm. Second fuel injection timing ITm is determined based on maps as shown in FIGs. 16 and 17. Fuel injection quantity adjustment factor Ktr1 and fuel injection quantity adjustment factor Ktr2 for reducing an increase in pumping loss are derived from tables as shown in FIGs. 18 and 19. Second fuel injection quantity Qm is multiplied by fuel injection quantity adjustment factor Ktr1 and fuel injection quantity adjustment factor Ktr2 to produce an adjusted second fuel injection quantity Qm.

At step S302, a check is made to determine whether or not a predetermined time period tspike is elapsed after the split retard combustion mode. NOx is dissociated and released from NOx trap 32 during time period tspike. Released from NOx trap 32, NOx is purified by reducing agent in exhaust gas. When the answer to step S302 is YES, the routine proceeds to step S303. On the other hand, when the answer to step S302 is NO, the routine returns.

At step S303, NOx regeneration flag Fsp is reset to zero, to switch the operating mode to the normal combustion mode. NOx quantity NOX is also reset to zero. Next, the routine returns.

Referring now to FIG. 23, there is shown a flow chart depicting a process of breakdown avoidance operation. Breakdown avoidance operation is implemented by controlling excess air ratio λ to a value higher than or equal to a value such as 1.4 (fuel-lean condition), which is higher than in PM regeneration or S regeneration. The normal combustion mode is employed to decrease the exhaust gas temperature.

At step S401, ECU 41 reads DPF temperature Tdpf. Next, the routine proceeds to step S402.

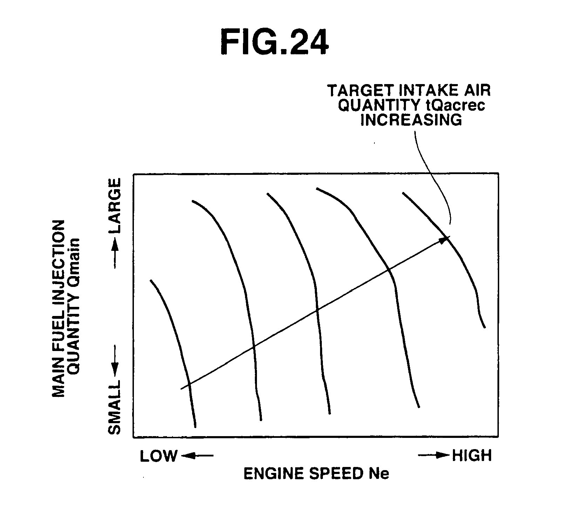

At step S402, ECU 41 controls excess air ratio λ to target excess air ratio tλrec, which is determined for breakdown avoidance operation. Target intake air quantity tQacrec is calculated or retrieved from a map as shown in FIG. 24 as a function of engine speed Ne and main fuel injection quantity Qmain. Next, the routine proceeds to step S403.

At step S403, a check is made to determine whether or not DPF temperature Tdpf is lower than or equal to a predetermined temperature T23. When the answer to step S302 is YES, it is determined that there is no possibility of burning unburned PM rapidly, and the routine proceeds to step S404. On the other hand, when the answer to step S403 is NO, the routine returns.

At step S404, breakdown avoidance flag Frec is reset to zero, to switch the operating mode to the normal combustion mode. Next, the routine returns.

Referring now to FIGs. 25, 27, and 28, there is shown a process of setting regeneration flags. One of these routines is executed when at least one of PM regeneration request flag rqREG, S regeneration request flag rqDESUL, and NOx regeneration request flag rqSP is switched to 1. These routines determine a priority or an execution order of operations and set PM regeneration flag Freg, S regeneration flag Fdesul, or NOx regeneration flag Fsp, when a plurality of request flag are set.

Referring now to FIG. 25, there is shown a flow chart depicting a first process of setting operating mode flags. At step S501, a check is made to determine whether or not S regeneration request flag rqDESUL is equal to zero. When the answer to step S501 is YES, the routine proceeds to step S503. On the other hand, when the answer to step S501 is NO, the routine proceeds to step S502.

At step S502, S regeneration flag Fdesul is set to 1. Next, the routine returns.

At step S503, a check is made to determine whether or not NOx regeneration request flag rqSP is equal to zero. When the answer to step S503 is YES, the routine proceeds to step S504. On the other hand, when the answer to step S503 is NO, the routine proceeds to step S506.

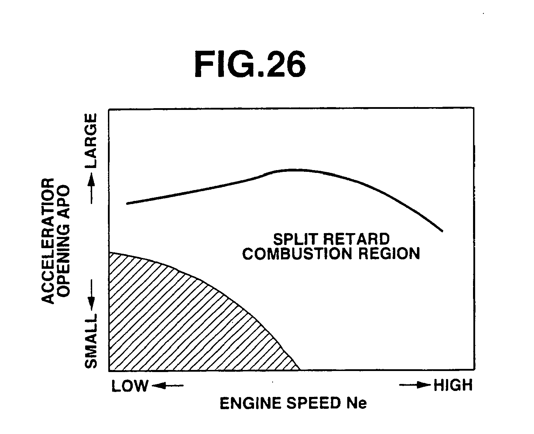

At step S504, a check is made to determine whether or not the current operating condition is within a split retard combustion region in which the split retard combustion mode can be employed. The split retard combustion region is defined in accordance with engine speed Ne and accelerator opening APO based on a map as shown in FIG. 26. Under low speed and low load conditions, the mode shift to the split retard combustion mode is inhibited. When the answer to step S504 is YES, the routine proceeds to step S505. On the other hand, when the answer to step S504 is NO, the routine returns.

At step S505, PM regeneration flag Freg is set to 1. Next, the routine returns.

At step S506, a check is made to determine whether or not engine 1 is operated under a low NOx condition where the quantity of NOx in exhaust gas is small. It is determined, for example, in accordance with whether or not the operating condition of engine 1 is in a steady operating condition. That is, it is determined that NOx quantity is small during engine 1 being operated in a steady condition. When the answer to step S506 is YES, the routine proceeds to step S507. On the other hand, when the answer to step S506 is NO, the routine returns.

At step S507, a check is made to determine whether or not DPF temperature Tdpf is higher than or equal to a predetermined threshold temperature T24. Temperature T24 is set to a temperature at which DPF 33 is activated, below target temperature in PM regeneration T21. When the answer to step S507 is YES, the routine proceeds to step S504. On the other hand, when the answer to step S507 is NO, it is determined it takes a comparable time period to increase DPF temperature Tdpf, and the routine proceeds to step S508.

At step S508, NOx regeneration flag Fsp is set to 1.

The routine shown in FIG. 27 is executed when PM regeneration request flag rqREG is equal to zero and S regeneration request flag rqDESUL is equal to 1. At step S601, a check is made to determine whether or not NOx trap temperature Tnox is higher than or equal to a predetermined threshold temperature T13. Temperature T13 is set to a minimum temperature at which the mode shift to S regeneration condition can be smoothly performed in a comparable short time period, and lower than target temperature for S regeneration T12. When the answer to step S601 is YES, the routine proceeds to step S602. On the other hand, when the answer to step S601 is NO, the routine proceeds to step S604.

At step S602, a check is made to determine whether or not the current operating condition is within the split retard combustion region in which the split retard combustion mode can be employed. The split retard combustion region is defined in accordance with engine speed Ne and accelerator opening APO based on a map as shown in FIG. 26. When the answer to step S602 is YES, the routine proceeds to step S603. On the other hand, when the answer to step S602 is NO, the routine returns.

At step S603, S regeneration flag Fdesul is set to 1. Next the routine returns.

At step S604, a check is made to determine whether or not NOx regeneration request flag rqSP is equal to zero. When the answer to step S604 is YES, the routine proceeds to step S602. On the other hand, when the answer to step S604 is NO, the routine proceeds to step S605, at which NOx regeneration flag Fsp is set to 1, and next returns. NOx regeneration gains a higher priority than S regeneration.

The routine shown in FIG. 28 is executed when PM regeneration request flag rqREG and S regeneration request flag rqDESUL are equal to zero and NOx regeneration request flag rqSP is equal to 1. Therefore, NOx regeneration flag Fsp is set to 1.

Referring now to FIG. 32, there is shown a process of rapid activation of the exhaust purifier. At step S1101, ECU 41 reads NOx trap temperature Tnox. Next, the routine proceeds to step S1102.

At step S1102, a check is made to determine whether or not the current operating condition is within the split retard combustion region by referring to a map as shown in FIG. 26. When the answer to step S1102 is YES, the routine proceeds to step S1103. On the other hand, when the answer to step S1102 is NO, the routine returns.

At step S1103, ECU 41 controls the engine system to the split retard combustion mode. In the split retard combustion mode, ECU 41 determines first fuel injection timing ITp and second fuel injection timing ITm based on maps shown in FIGs. 15 to 17. Retarding second fuel injection timing ITm results in raising the exhaust gas temperature and activating NOx trap 32. In addition, fuel injection quantity adjustment factor Ktr1 is determined based on a map as shown in FIG. 18. Second fuel injection quantity Qm is multiplied by fuel injection quantity adjustment factor Ktr1 to produce an adjusted second fuel injection quantity Qm. In the rapid activation, target excess air ratio $t\lambda$ is set to a normal value as in the normal combustion mode. Next, the routine proceeds to step S1104.

At step S1104, a check is made to determine whether or not NOx trap temperature Tnox is higher than or equal to the threshold temperature T11. When the answer to step S1104 is YES, the routine returns. On the other hand, when the answer to step S1104 is NO, the routine repeats step S1103. After the routine returning, the combustion mode is shifted to the normal combustion mode (step S16).

The following describes effects produced by a combustion control apparatus for internal combustion engine in accordance to the embodiment of the present invention. First, PM regeneration of DPF 33, S regeneration, NOx regeneration, and the rapid activation, of NOx trap 32 are implemented by shifting the engine operating mode to the split retard combustion mode, in which the second fuel injection is executed at a late timing or crank angle than the main fuel injection in the normal combustion mode. This results in raising the exhaust gas temperature to warm NOx trap 32 to a target temperature. In PM regeneration mode or S regeneration mode, exhaust air fuel ratio is lowered by decreasing intake air quantity. The first fuel injection causes the preliminary combustion, which releases heat to raise incylinder temperature. This leads to a stable process of the main combustion.

Second, time interval Δtij between first and second fuel injection is adjusted so that the start timing of the main combustion follows the end timing of preliminary combustion. This raises the proportion of the premixed combustion. Lowering the excess air ratio in PM regeneration, NOx regeneration, and S regeneration reduces exhaust smoke, because the premixed combustion predominates in the main combustion.

Third, in the mode transition processes between S regeneration of NOx trap 32 and PM regeneration of DPF 33, target excess air ratio tλ is switched at the beginnings of the processes (steps S71, and S91). During the operating condition of the engine varying in accordance with target excess air ratio tλ, second fuel injection timing ITm is controlled in accordance with the actual excess air ratio λ (steps S75, and S95). Therefore, the excess air ratio can be controlled with the exhaust gas temperature held in a predetermined preferable range for regeneration of the exhaust purifier, which results in an efficient and smooth shift of the operating mode of the engine. In the shown embodiment, during the mode transition process from S regeneration to PM regeneration, second fuel injection timing ITm is retarded with increasing excess air ratio, that is, with increasing incylinder temperature in accordance with increasing quantity of working gas.

In the shown embodiment, the mode transition from S regeneration to PM regeneration occurs, in case (1) S is accumulated up to the threshold quantity during the operating condition being out of the split combustion region with PM quantity PMQ being larger than the threshold quantity, so that S regeneration is executed prior to PM regeneration (steps S504, S501); in case (2) S is accumulated up to the threshold quantity during NOx regeneration being executed by priority to PM regeneration, so that S regeneration is executed prior to PM regeneration (steps S503, S501); and in case (3) PM is accumulated up to the threshold quantity during S regeneration, so that PM regeneration follows S regeneration. On the other hand, the mode transition from PM regeneration to S regeneration occurs in such a case S is accumulated up to the threshold quantity during PM regeneration.

In the shown embodiment, the engine includes separate NOx trap 32 and DPF 33. Alternatively, the engine may include an integral exhaust purifier. For example, the catalyst of NOx trap may be mounted on the filter element of DPF 33.

This application is based on a prior Japanese Patent Application No. 2003-284327 filed July 31, 2003.

While the foregoing is a description of the preferred embodiments carried out the invention, it will be understood that the invention is not limited to the particular embodiments shown and described herein, but that various changes and modifications may be made without departing from the scope of this invention as defined by the following claims.

**Claims**

1. A combustion control apparatus for an internal combustion engine, comprising:

   a combustion controlling actuator (12, 15, 21, 35, 122, 151, 351) for causing combustion in a combustion chamber of the engine;
   a controller (41) for controlling the combustion controlling actuator (12, 15, 21, 35, 122, 151, 351); and
   the controller (41) configured to perform the following:

   switching a combustion mode between a normal combustion mode and a split retard combustion mode (32, 33);
   producing an increase request for an increase in an exhaust gas temperature of the engine, in accordance with an operating condition of the engine; and
   performing the following in the normal combustion mode:

   producing normal combustion to generate an output torque of the engine; and

   performing the following in the split retard combustion mode in response to the increase request:

   producing preliminary combustion at or near top dead center, to release a predetermined quantity of heat in the combustion chamber;
   starting main combustion at a timing later than a start timing of the normal combustion in the normal combustion mode, after an end of the preliminary combustion, to generate the output torque of the engine; and
   producing a shift request for shifting a target exhaust gas temperature, in accordance with the operating condition of the engine;

controlling an excess air ratio of the engine, to regulate the exhaust gas temperature in accordance with varying target exhaust gas temperature, in response to the shift request; and

adjusting the start timing of the main combustion in accordance with a change in the excess air ratio.

2. A combustion control apparatus for an internal combustion engine, comprising:

a fuel injector (21) for injecting fuel directly into a combustion chamber of the engine;
a controller (41) for controlling the fuel injector (21); and
the controller (41) configured to perform the following:

switching a combustion mode between a normal combustion mode and a split retard combustion mode, in accordance with an operating condition of the engine;
producing an increase request for an increase in an exhaust gas temperature of the engine, in accordance with an operating condition of the engine; and
performing the following in the normal combustion mode:

controlling a normal fuel injection to produce normal combustion to generate an output torque of the engine; and

performing the following in the split retard combustion mode in response to the increase request:

controlling a first fuel injection to produce preliminary combustion at or near top dead center, to release a predetermined quantity of heat;
starting a second fuel injection at a timing later than a start timing of the normal fuel injection in the normal combustion mode, to start main combustion after an end of the preliminary combustion, to generate the output torque of the engine;
determining a first target exhaust gas temperature and a second target exhaust gas temperature;
producing a shift request for shifting a target exhaust gas temperature from the first target exhaust gas temperature to the second target exhaust gas temperature when a predetermined condition is satisfied;
controlling an excess air ratio of the engine, to regulate the exhaust gas temperature from the first target exhaust gas temperature to the second target exhaust gas temperature, in response to the shift request; and
adjusting the timing of the second fuel injection, in accordance with a change in the excess air ratio.

3. The combustion control apparatus as claimed in claim 2, further comprising a condition sensor (51, 52, 53, 54, 55, 56) for collecting information needed to determine the operating condition of the engine.

4. The combustion control apparatus as claimed in claim 3, wherein:

the condition sensor (51, 52, 53, 54, 55, 56) senses the excess air ratio; and
the controller (41) is configured to perform the following in the split retard combustion mode:

adjusting the timing of the second fuel injection in accordance with a change in the sensed excess air ratio.

5. The combustion control apparatus as claimed in claim 4, wherein the controller (41) is configured to perform the following, when the second target temperature is lower than the first target temperature:

increasing the excess air ratio to decrease the exhaust gas temperature from the first target temperature to the second target temperature; and
retarding the timing of the second fuel injection in accordance with an increase of the sensed excess air ratio.

6. The combustion control apparatus as claimed in claim 5, wherein the controller (41) is configured to retard the timing of the second fuel injection continuously in accordance with the increase in the sensed excess air ratio.

7. The combustion control apparatus as claimed in claim 4, wherein the controller (41) is configured to perform the following, when the second target temperature is higher than the first target temperature:

decreasing the excess air ratio to increase the exhaust gas temperature from the first target temperature to the second target temperature; and

advancing the timing of the second fuel injection in accordance with a decrease in the sensed excess air ratio.

8. The combustion control apparatus as claimed in claim 7, wherein the controller (41) is configured to advance the timing of the second fuel injection continuously in accordance with the decrease in the sensed excess air ratio.

9. The combustion control apparatus as claimed in any one of claims 1 to 8, further comprising an exhaust purifier (32, 33) in an exhaust gas passage (31) of the engine, wherein the condition sensor (51, 52, 53, 54, 55, 56) senses information needed to determine the condition of the exhaust purifier (32, 33); and the controller (41) is configured to produce the increase request, in accordance with the condition of the exhaust purifier (32, 33).

10. The combustion control apparatus as claimed in claim 9, wherein the exhaust purifier (32, 33) includes at least one of a particulate filter (33) and a NOx trap.

11. The combustion control apparatus as claimed in claim 9, wherein the condition of the exhaust purifier (32, 33) includes a quantity of a substance trapped in the exhaust purifier (32, 33).

12. The combustion control apparatus as claimed in claim 11, wherein the trapped substance includes at least one of particulate matter and sulfur content (32, 33).

13. The combustion control apparatus as claimed in claim 9, wherein the exhaust purifier (32, 33) comprises a particulate filter (33); and the controller (41) is configured to perform the following:

producing a regeneration request for removing particulate matter from the particulate filter (33), in accordance with the condition of the exhaust purifier (32, 33); and
producing the increase request in response to the regeneration request.

14. The combustion control apparatus as claimed in claim 9, wherein the exhaust purifier (32, 33) comprises a NOx trap (32); and the controller (41) is configured to perform the following:

producing a regeneration request for removing sulfur content from the NOx trap (32), in accordance with the condition of the exhaust purifier (32, 33); and
producing the increase request in response to the regeneration request.

15. The combustion control apparatus as claimed in claim 9, wherein the exhaust purifier (32, 33) comprises a particulate filter (33) and a NOx trap (32); and the controller (41) is configured to perform the following:

producing a first regeneration request for removing particulate matter from the particulate filter (33), in accordance with the condition of the exhaust purifier (32, 33);
producing a second regeneration request for removing sulfur content from the NOx trap (32), in accordance with the condition of the exhaust purifier (32, 33); and
producing the increase request in response to the first regeneration request and the second regeneration request.

16. The combustion control apparatus as claimed in claim 15, wherein the predetermined condition is satisfied when both of the first regeneration request and the second regeneration request is present so that an operation of removing sulfur content from the NOx trap and an operation of removing particulate matter from the particulate filter are executed in succession.

17. The combustion control apparatus as claimed in claim 16, wherein the controller (41) is configured to determine an execution order of the operation of removing sulfur content from the NOx trap and the operation of removing particulate matter from the particulate filter (32), in accordance with the condition of the engine.

18. A method of controlling combustion for an internal combustion engine, comprising:

switching a combustion mode between a normal combustion mode and a split retard combustion mode (32, 33);
producing an increase request for an increase in an exhaust gas temperature of the engine, in accordance with an operating condition of the engine; and
performing the following in the normal combustion mode:

producing normal combustion to generate an output torque of the engine; and

performing the following in the split retard combustion mode in response to the increase request:

producing preliminary combustion at or near top dead center, to release a predetermined quantity of heat in the combustion chamber;

starting main combustion at a timing later than a start timing of the normal combustion in the normal combustion mode, after an end of the preliminary combustion, to generate the output torque of the engine; and

producing a shift request for shifting a target exhaust gas temperature, in accordance with the operating condition of the engine;

controlling an excess air ratio of the engine, to regulate the exhaust gas temperature in accordance with varying target exhaust gas temperature, in response to the shift request; and

adjusting the start timing of the main combustion in accordance with a change in the excess air ratio.

**Patentansprüche**

1. Verbrennungssteuervorrichtung für einen Verbrennungsmotor, die umfasst:

ein Verbrennungssteuerungs-Betätigungselement (12, 15, 21, 35, 122, 151, 351), das Verbrennung in einer Brennkammer des Motors bewirkt;

eine Steuereinheit (41) zum Steuern des Verbrennungssteuerungs-Betätigungselementes (12, 15, 21, 35, 122, 151, 351); und

wobei die Steuereinheit (41) so konfiguriert ist, dass sie die folgenden Schritte durchführt:

Umschalten eines Verbrennungsmodus zwischen einem Modus normaler Verbrennung und einem Modus (32, 33) geteilter verzögerter Verbrennung;

Produzieren einer Erhöhungs-Anforderung für eine Erhöhung einer Abgastemperatur des Motors entsprechend einer Betriebsbedingung des Motors; und

in dem Modus normaler Verbrennung die folgenden Schritte durchführt:

Produzieren normaler Verbrennung, um ein Ausgangsdrehmoment des Motors zu erzeugen; und

in dem Modus geteilter verzögerter Verbrennung in Reaktion auf die Erhöhungs-Anforderung die folgenden Schritte durchführt:

Produzieren von Vorverbrennung an oder nahe am oberen Totpunkt, um eine vorgegebene Menge an Wärme in der Brennkammer freizusetzen;

Ingangsetzen von Hauptverbrennung zu einer Zeit nach einer Zeit des Ingangsetzens der normalen Verbrennung in dem Modus normaler Verbrennung nach einem Ende der Vorverbrennung, um das Ausgangsdrehmoment des Motors zu erzeugen; und

Produzieren einer Verschiebungs-Anforderung zum Verschieben einer Soll-Abgastemperatur entsprechend der Betriebsbedingung des Motors;

in Reaktion auf die Verschiebungs-Anforderung Steuern eines Luftüberschussverhältnisses des Motors, um die Abgastemperatur entsprechend veränderlicher Soll-Abgastemperatur zu regulieren; und

Einstellen der Zeit des Ingangsetzens der Hauptverbrennung entsprechend einer Änderung des Luftüberschussverhältnisses.

2. Verbrennungssteuervorrichtung für einen Verbrennungsmotor, die umfasst:

ein Kraftstoffeinspritzventil (21) zum direkten Einspritzen von Kraftstoff in eine Brennkammer des Motors;

eine Steuereinheit (41) zum Steuern des Kraftstoffeinspritzventils (21); und

wobei die Steuereinheit (41) so konfiguriert ist, dass sie die folgenden Schritte durchführt:

Umschalten eines Verbrennungsmodus zwischen einem Modus normaler Verbrennung und einem Modus geteilter verzögerter Verbrennung entsprechend einer Betriebsbedingung des Motors;

Produzieren einer Erhöhungs-Anforderung für eine Erhöhung einer Abgastemperatur des Motors entsprechend einer Betriebsbedingung des Motors; und
in dem Modus normaler Verbrennung die folgenden Schritte durchführt:

Steuern einer normalen Kraftstoffeinspritzung, um normale Verbrennung zu produzieren und ein Ausgangsdrehmoment des Motors zu erzeugen; und
in dem Modus geteilter verzögerter Verbrennung in Reaktion auf die Erhöhungs-Anforderung die folgenden Schritte durchführt:

Steuern einer ersten Kraftstoffeinspritzung, um eine Vorverbrennung an oder nahe am oberen Totpunkt zu produzieren und eine vorgegebene Menge an Wärme freizusetzen;
Ingangsetzen einer zweiten Kraftstoffeinspritzung zu einer Zeit nach einer Zeit des Ingangsetzens der normalen Kraftstoffeinspritzung in dem Modus normaler Verbrennung, um Hauptverbrennung nach einem Ende der Vorverbrennung in Gang zu setzen und das Ausgangsdrehmoment des Motors zu erzeugen;
Bestimmen einer ersten Soll-Abgastemperatur und einer zweiten Soll-Abgastemperatur;
Produzieren einer Verschiebungs-Anforderung zum Verschieben einer Soll-Abgastemperatur von der ersten Soll-Abgastemperatur zu der zweiten Soll-Abgastemperatur, wenn eine vorgegebene Bedingung erfüllt ist;
Steuern eines Luftüberschussverhältnisses des Motors, um die Abgastemperatur von der ersten Soll-Abgastemperatur auf die zweite Soll-Abgastemperatur zu regulieren; und
Einstellen der Zeit der zweiten Kraftstoffeinspritzung entsprechend einer Änderung des Luftüberschussverhältnisses.

3. Verbrennungssteuervorrichtung nach Anspruch 2, die des Weiteren einen Bedingungs-Sensor (51, 52, 53, 54, 55, 56) zum Sammeln von Informationen umfasst, die benötigt werden, um die Betriebsbedingung des Motors zu bestimmen.

4. Verbrennungssteuervorrichtung nach Anspruch 3, wobei:

der Bedingungs-Sensor (51, 52, 53, 54, 55, 56) das Luftüberschussverhältnis erfasst; und
die Steuereinheit (41) so konfiguriert ist, dass sie in dem Modus geteilter verzögerter Verbrennung den folgenden Schritt durchführt:

Einstellen der Zeit der zweiten Kraftstoffeinspritzung entsprechend einer Änderung des erfassten Luftüberschussverhältnisses.

5. Verbrennungssteuervorrichtung nach Anspruch 4, wobei die Steuereinheit (41) so konfiguriert ist, dass sie, wenn die zweite Soll-Temperatur niedriger ist als die erste Soll-Temperatur, die folgenden Schritte durchführt:

Erhöhen des Luftüberschussverhältnisses, um die Abgastemperatur von der ersten Soll-Temperatur auf die zweite Soll-Temperatur zu verringern; und
Verzögern der Zeit der zweiten Kraftstoffeinspritzung entsprechend einem Anstieg des erfassten Luftüberschussverhältnisses.

6. Verbrennungssteuervorrichtung nach Anspruch 5, wobei die Steuereinheit (41) so konfiguriert ist, dass sie die Zeit der zweiten Kraftstoffeinspritzung kontinuierlich entsprechend dem Anstieg des erfassten Luftüberschussverhältnisses verzögert.

7. Verbrennungssteuervorrichtung nach Anspruch 4, wobei die Steuereinheit (41) so konfiguriert ist, dass sie, wenn die zweite Solltemperatur höher ist als die erste Solltemperatur, die folgenden Schritte durchführt:

Verringern des Luftüberschussverhältnisses, um die Abgastemperatur von der ersten Abgastemperatur auf die zweite Abgastemperatur zu erhöhen; und
Vorverlegen der Zeit der zweiten Kraftstoffeinspritzung entsprechend einer Verringerung des erfassten Luftüberschussverhältnisses.

8. Verbrennungssteuervorrichtung nach Anspruch 7, wobei die Steuereinheit (41) so konfiguriert ist, dass sie die Zeit der zweiten Kraftstoffeinspritzung kontinuierlich entsprechend der Verringerung des erfassten Luftüberschussverhältnisses vorverlegt.

9. Verbrennungssteuervorrichtung nach einem der Ansprüche 1 bis 8, die des Weiteren eine Abgasreinigungseinrichtung (32, 33) in einem Abgaskanal (31) des Motors umfasst, wobei der Bedingungs-Sensor (51, 52, 53, 54, 55, 56) Informationen erfasst, die benötigt werden, um die Bedingung der Abgasreinigungseinrichtung (32, 33) zu bestimmen, und die Steuereinheit (41) so konfiguriert ist, dass sie die Erhöhungs-Anforderung entsprechend der Bedingung der Abgasreinigungseinrichtung (32, 33) produziert.

10. Verbrennungssteuervorrichtung nach Anspruch 9, wobei die Abgasreinigungseinrichtung (32, 33) wenigstens einen Teilchenfilter (33) oder eine NOx-Falle enthält.

11. Verbrennungssteuervorrichtung nach Anspruch 9, wobei die Bedingung der Abgasreinigungseinrichtung (32, 33) eine Menge an Substanz einschließt, die in der Abgasreinigungseinrichtung (32, 33) eingefangen ist.

12. Verbrennungssteuervorrichtung nach Anspruch 11, wobei die eingefangene Substanz wenigstens Feststoffteilchen und Schwefelgehalt (32, 33) enthält.

13. Verbrennungssteuervorrichtung nach Anspruch 9, wobei die Abgasreinigungseinrichtung (32, 33) einen Teilchenfilter (33) umfasst und die Steuereinheit (41) so konfiguriert ist, dass sie die folgenden Schritte durchführt:

Produzieren einer Regenerierungs-Anforderung zum Entfernen von Feststoffteilchen aus dem Teilchenfilter (33) entsprechend der Bedingung der Abgasreinigungseinrichtung (32, 33); und
Produzieren der Erhöhungs-Anforderung in Reaktion auf die Regenerierungs-Anforderung.

14. Verbrennungssteuervorrichtung nach Anspruch 9, wobei die Abgasreinigungseinrichtung (32, 33) eine NOx-Falle (32) umfasst und die Steuereinheit (41) so konfiguriert ist, dass sie die folgenden Schritte durchführt:

Produzieren einer Regenerierungs-Anforderung zum Entfernen von Schwefelgehalt aus der NOx-Falle (32) entsprechend der Bedingung der Abgasreinigungseinrichtung (32, 33); und
Produzieren der Erhöhungs-Anforderung in Reaktion auf die Regenerierungs-Anforderung.

15. Verbrennungssteuervorrichtung nach Anspruch 9, wobei die Abgasreinigungseinrichtung (32, 33) einen Teilchenfilter (33) und eine NOx-Falle (32) umfasst und die Steuereinheit (41) so konfiguriert ist, dass sie die folgenden Schritte durchführt:

Produzieren einer ersten Regenerierungs-Anforderung zum Entfernen von Feststoffteilchen aus dem Teilchenfilter (33) entsprechend der Bedingung der Abgasreinigungseinrichtung (32, 33);
Produzieren einer zweiten Regenerierungs-Anforderung zum Entfernen von Schwefelgehalt aus der NOx-Falle (32) entsprechend der Bedingung der Abgasreinigungseinrichtung (32, 33); und
Produzieren der Erhöhungs-Anforderung in Reaktion auf die ersten Regenerierungs-Anforderung und die zweite Regenerierungs-Anforderung.

16. Verbrennungssteuervorrichtung nach Anspruch 15, wobei die vorgegebene Bedingung erfüllt ist, wenn sowohl die erste Regenerierungs-Anforderung als auch die zweite Regenerierungs-Anforderung vorhanden sind, so dass ein Vorgang des Entfernens von Schwefelgehalt aus der NOx-Falle und ein Vorgang des Entfernens von Feststoffteilchen aus dem Teilchenfilter nacheinander ausgeführt werden.

17. Verbrennungssteuervorrichtung nach Anspruch 16, wobei die Steuereinheit (41) so konfiguriert ist, dass sie eine Ausführungsreihenfolge des Vorgangs des Entfernens von Schwefelgehalt aus der NOx-Falle und des Vorgangs des Entfernens von Feststoffteilchen aus dem Teilchenfilter (32) entsprechend der Bedingung des Motors bestimmt.

18. Verfahren zum Steuern von Verbrennung für einen Verbrennungsmotor, das umfasst:

Umschalten eines Verbrennungsmodus zwischen einem Modus normaler Verbrennung und einem Modus (32, 33) geteilter verzögerter Verbrennung;
Produzieren einer Erhöhungs-Anforderung für eine Erhöhung einer Abgastemperatur entsprechend einer Betriebsbedingung des Motors; und
Durchführen der folgenden Schritte in dem Modus normaler Verbrennung:

Produzieren normaler Verbrennung, um ein Ausgangsdrehmoment des Motors zu erzeugen; und
Durchführen der folgenden Schritte in dem Modus geteilter verzögerter Verbrennung in Reaktion auf die Erhöhungs-Anforderung:

Produzieren von Vorverbrennung an oder nahe im oberen Totpunkt, um eine vorgegebene Menge an Wärme in der Brennkammer freizusetzen;
Ingangsetzen von Hauptverbrennung zu einer Zeit nach einer Zeit des Ingangsetzens der normalen Verbrennung in dem Modus normaler Verbrennung nach einem Ende der Vorverbrennung, um das Ausgangsdrehmoment des Motors zu erzeugen; und
Produzieren einer Verschiebungs-Anforderung zum Verschieben einer Soll-Abgastemperatur entsprechend der Betriebsbedingung des Motors,
in Reaktion auf die Verschiebungs-Anforderung Steuern eines Luftüberschussverhältnisses des Motors, um die Abgastemperatur entsprechend veränderlicher Soll-Abgastemperatur zu regulieren; und
Einstellen der Zeit des Ingangsetzens der Hauptverbrennung entsprechend einer Änderung des Luftüberschussverhältnisses.

## Revendications

1. Appareil de commande de la combustion d'un moteur à combustion interne, comprenant:

   un actionneur de commande de combustion (12,15, 21,35, 122,151,351) pour provoquer la combustion dans une chambre de combustion du moteur;
   un dispositif de commande (41) pour commander l'actionneur de commande de combustion (12,15,21,35, 122,151,351); et
   le dispositif de commande (41) étant configuré pour exécuter ce qui suit:

   commuter un mode de combustion entre un mode de combustion normal et un mode de combustion retardé divisé (32, 33) ;
   produire une demande d'augmentation pour augmenter la température des gaz d'échappement du moteur, en accord avec un état de fonctionnement du moteur; et
   exécuter ce qui suit en mode de combustion normal:

   produire une combustion normale pour produire un couple de sortie du moteur; et
   exécuter ce qui suit en mode de combustion retardé divisé en réponse à la demande d'augmentation:

   produire une combustion préliminaire à ou près du point mort haut, pour libérer une quantité de chaleur prédéterminée dans la chambre de combustion;
   démarrer la combustion principale à un instant plus tard qu'un instant de démarrage de la combustion normale en mode de combustion normal, après la fin de la combustion préliminaire, pour produire le couple de sortie du moteur; et
   produire une demande de décalage pour décaler une température de gaz d'échappement cible, en accord avec l'état de fonctionnement du moteur;
   commander un rapport d'air excédentaire du moteur pour régler la température des gaz d'échappement en accord avec la température variante des gaz d'échappement cible, en réponse à la demande de décalage; et
   régler l'instant de départ de la combustion principale en accord avec un changement dans le rapport d'air excédentaire.

2. Appareil de commande de combustion pour un moteur à combustion interne, comprenant:

   un injecteur de carburant (21) pour injecter le carburant directement dans une chambre de combustion du moteur;
   un dispositif de commande (41) pour commander l'injecteur de carburant (21); et
   le dispositif de commande (41) étant configuré pour exécuter ce qui suit:

   commuter un mode de combustion entre un mode de combustion normal et un mode de combustion retardé divisé, en accord avec un état de fonctionnement du moteur;
   produire une demande d'augmentation pour augmenter la température des gaz d'échappement du moteur

en accord avec un état de fonctionnement du moteur; et

exécuter ce qui suit en mode de combustion normal:

commander une injection de carburant normale pour produire une combustion normale afin de générer un couple de sortie du moteur; et

exécuter ce qui suit en mode de combustion retardé, divisé en réponse à la demande d'augmentation:

commander une première injection de carburant pour produire une combustion préliminaire à ou à proximité du point mort haut, pour libérer une quantité de chaleur prédéterminée;

démarrer une seconde injection de carburant à un instant plus tard que l'instant de démarrage de l'injection de carburant normale en mode de combustion normal, pour commencer la combustion principale après la fin de la combustion préliminaire, pour générer le couple de sortie du moteur;

déterminer une première température cible des gaz d'échappement et une seconde température cible des gaz d'échappement;

produire une demande de décalage pour décaler la température cible des gaz d'échappement de la première température cible des gaz d'échappement à la seconde température cible des gaz d'échappement lorsqu'un état prédéterminé est satisfait;

commander un rapport d'air excédentaire du moteur pour régler la température des gaz d'échappement de la première température cible des gaz d'échappement à la seconde température cible des gaz d'échappement, en réponse à la demande de décalage; et

régler l'instant de la seconde injection de carburant, en accord avec un changement dans le rapport de l'air excédentaire.

3. Appareil de commande de combustion selon la revendication 2, comprenant en outre un capteur d'état (51,52,53,54,55,56) pour recueillir des informations nécessaires pour déterminer l'état de fonctionnement du moteur.

4. Appareil de commande de combustion selon la revendication 3, dans lequel:

le capteur d'état (51,52,53,54,55,56) détecte le rapport de l'air excédentaire; et

le dispositif de commande (41) est configuré pour exécuter ce qui suit en mode de combustion retardé divisé:

régler l'instant de la seconde injection du carburant en accord avec un changement dans le rapport détecté de l'air excédentaire.

5. Appareil de commande de combustion selon la revendication 4, où le dispositif de commande (41) est configuré pour exécuter ce qui suit, lorsque la seconde température cible est plus basse que la première température cible:

augmenter le rapport de l'air excédentaire afin de diminuer la température des gaz d'échappement de la première température cible à la seconde température cible; et

retarder l'instant de la seconde injection du carburant en accord avec une augmentation du rapport détecté de l'air excédentaire.

6. Appareil de commande de combustion selon la revendication 5, où le dispositif de commande (41) est configuré pour retarder l'instant de la seconde injection de carburant continuellement en accord avec l'augmentation du rapport détecté de l'air excédentaire.

7. Appareil de commande de combustion selon la revendication 4, où le dispositif de commande (41) est configuré pour exécuter ce qui suit, lorsque la seconde température cible est plus élevée que la première température cible:

diminuer le rapport de l'air excédentaire pour augmenter la température des gaz d'échappement de la première température cible à la seconde température cible; et

avancer l'instant de la seconde injection de carburant en accord avec une diminution du rapport détecté de l'air excédentaire.

8. Appareil de commande de combustion selon la revendication 7, où le dispositif de commande (41) est configuré pour faire avancer l'instant de la seconde injection de carburant continuellement en accord avec la diminution du rapport détecté de l'air excédentaire.

9. Appareil de commande de combustion selon l'une des revendications 1 à 8, comprenant en outre un épurateur d'échappement (32,33) dans un passage de gaz d'échappement (31) du moteur, où le capteur d'état (51,52,53,54,55,56) détecte les informations nécessaires pour déterminer l'état de l'épurateur d'échappement (32,33); et le dispositif de commande (41) est configuré pour produire la demande d'augmentation, en accord avec l'état de l'épurateur d'échappement (32, 33).

10. Appareil de commande de combustion selon la revendication 9, où l'épurateur d'échappement (32,33) comprend au moins l'un parmi un filtre de matières en suspension (33) et un piège de NOx.

11. Appareil de commande de combustion selon la revendication 9, où l'état de l'épurateur d'échappement (32,33) comprend une quantité d'une substance retenue dans l'épurateur d'échappement (32,33).

12. Appareil de commande de combustion selon la revendication 11, où la substance piégée comprend au moins l'un parmi une matière en suspension et une teneur en soufre (32,33).

13. Appareil de commande de combustion selon la revendication 9, où l'épurateur d'échappement (32,33) comprend un filtre de matières en suspension (33); et le dispositif de commande (41) est configuré pour exécuter ce qui suit:

produire une demande de régénération pour retirer les matières en suspension du filtre des matières en suspension (33) en accord avec l'état de l'épurateur d'échappement (32,33); et
produire la demande d'augmentation en réponse à la demande de régénération.

14. Appareil de commande de combustion selon la revendication 9, où l'épurateur d'échappement (32,33) comprend un piège de NOx (32); et le dispositif de commande (41) est configuré pour exécuter ce qui suit:

produire une demande de régénération pour supprimer la teneur en soufre du piège de NOx (32) en accord avec l'état de l'épurateur d'échappement (32,33); et
produire la demande d'augmentation en réponse à la demande de régnération.

15. Appareil de commande de combustion selon la revendication 9, où l'épurateur d'échappement (32,33) comprend un filtre de matières en suspension (33) et un piège de NOx (32); et le dispositif de commande (41) est configuré pour exécuter ce qui suit:

produire une première demande de régénération pour retirer les matières en suspension du filtre de matières en suspension (33) en accord avec l'état de l'épurateur d'échappement (32,33);
produire une seconde demande de régénération pour supprimer la teneur en soufre du piège de NOx (32), en accord avec l'état de l'épurateur d'échappement (32,33); et
produire la demande d'augmentation en réponse à la première demande de régénération et à la seconde demande de régénération.

16. Appareil de commande de combustion selon la revendication 15, où l'état prédéterminé est satisfait lorsqu'à la fois la première demande de régénération et la seconde demande de régénération sont présentes de sorte qu'une opération de retrait de la teneur en soufre du piège de NOx et une opération de retrait des matières en suspension du filtre de matières en suspension sont exécutées successivement.

17. Appareil de commande de combustion selon la revendication 16, où le dispositif de commande (41) est configuré pour déterminer un ordre d'exécution de l'opération consistant à retirer une teneur en soufre du piège de NOx et de l'opération consistant à retirer les matières en suspension du filtre de matières en suspension (32), en accord avec l'état du moteur.

18. Procédé de commande de la combustion d'un moteur à combustion interne comprenant les étapes consistant à:

commuter un mode de combustion entre un mode de combustion normal et un mode de combustion retardé divisé (32,33);
produire une demande d'augmentation pour augmenter la température des gaz d'échappement du moteur, en accord avec un état de fonctionnement du moteur; et
exécuter ce qui suit en mode de combustion normal:

produire une combustion normale pour générer un couple de sortie du moteur; et

exécuter ce qui suit en mode de combustion retardé divisé en réponse à la demande d'augmentation:

produire une combustion préliminaire à ou près du point mort haut, pour libérer une quantité de chaleur prédéterminée dans la chambre de combustion;

démarrer la combustion principale à un instant plus tard que l'instant de départ de la combustion normale en mode de combustion normal, après la fin de la combustion préliminaire, pour générer le couple de sortie du moteur; et

produire une demande de décalage pour décaler une température cible des gaz d'échappement en accord avec l'état de fonctionnement du moteur;

commander un rapport d'air excédentaire du moteur, pour régler la température des gaz d'échappement en accord avec la température variante cible des gaz d'échappement, en réponse à la demande de décalage; et

ajuster l'instant de départ de la combustion principale en accord avec un changement dans le rapport d'air excédentaire.

# FIG.1

# FIG.2

( START )

S1 — READ OPERATING CONDITIONS:
ENGINE SPEED Ne, ACCELERATOR OPENING APO, NOx TRAP
TEMPERATURE Tnox, AND EXHAUST GAS PRESSURE Pexh

S2 — Tnox ≧ T11? — NO → GO TO FIG. 32

YES

S3 — DETERMINE NOx QUANTITY NOX IN NOx TRAP

S4 — DETERMINE S QUANTITY SOX IN NOx TRAP

S5 — DETERMINE PM QUANTITY PMQ IN DPF

YES

S6 — Freg = 0? — NO → GO TO FIG. 11

YES

S7 — Fdesul = 0? — NO → GO TO FIG. 20

YES

S8 — Fsp = 0? — NO → GO TO FIG. 22

YES

S9 — Frec = 0? — NO → GO TO FIG. 23

YES

S10 — rqREG = 0? — NO → GO TO FIG. 25

YES

S11 — rqDESUL = 0? — NO → GO TO FIG. 27

YES

S12 — rqSP = 0? — NO → GO TO FIG. 28

YES

S13 — PMQ ≧ PM1? — YES → GO TO FIG. 29

NO

S14 — SOX ≧ SOX1? — YES → GO TO FIG. 30

NO

S15 — NOX ≧ NOX1? — YES → GO TO FIG. 31

NO

S16 — OPERATE ENGINE IN NORMAL LEAN COMBUSTION MODE

( RETURN )

# FIG.3

THRESHOLD PRESSURE
Pe1 INCREASING

FUEL INJECTION
QUANTITY REQUEST Qfdrv
LARGE
SMALL

LOW ← → HIGH

ENGINE SPEED Ne

25

**FIG.4A** FUEL INJECTION PATTERN

10~30° CA

**FIG.4B** HEAT RELEASE RATE

TDC    CRANK ANGLE

INTAKE STROKE    COMPRESSION STROKE    EXPANSION STROKE    EXHAUST STROKE

EP 1 496 236 B1

EP 1 496 236 B1

**FIG.5A** FUEL INJECTION PATTERN

Δtij

**FIG.5B** HEAT RELEASE RATE

Δtigp    Δtigm

20° CA OR MORE

50° ATDC OR AFTER

P

M

ITp

ITm

TDC

CRANK ANGLE

INTAKE STROKE    COMPRESSION STROKE    EXPANSION STROKE    EXHAUST STROKE

# FIG.6A

HIGH

EXHAUST GAS TEMPERATURE

# FIG.6B

LARGE

SMOKE QUANTITY

# FIG.6C

LARGE

CO QUANTITY

# FIG.6D

LARGE

HC QUANTITY

TDC

CRANK ANGLE

SECOND FUEL INJECTION TIMING ITm

**FIG.7A** FUEL INJECTION PATTERN

Δtigp   Δtigm

50° ATDC OR AFTER

**FIG.7B** HEAT RELEASE RATE

P1   P2   M

TDC   CRANK ANGLE

INTAKE STROKE   COMPRESSION STROKE   EXPANSION STROKE   EXHAUST STROKE

EP 1 496 236 B1

# FIG.8

```
        ( START )
            │
            ▼
         ╱─────────╲                    S51
  NO   ╱ COMBUSTION ╲
◄──────  MODE SHIFT
       ╲ COMMANDED ╱
        ╲    ?    ╱
         ╲───────╱
            │ YES
            ▼
┌──────────────────────────┐          S52
│ READ OPERATING CONDITIONS: │
│   ENGINE SPEED Ne, AND     │
│ ACCELERATOR OPENING APO    │
└──────────────────────────┘
            │
            ▼
┌──────────────────────────┐          S53
│  DETERMINE SECOND FUEL    │
│  INJECTION QUANTITY Qm     │
└──────────────────────────┘
            │
            ▼
┌──────────────────────────┐          S54
│  DETERMINE FIRST FUEL     │
│  INJECTION QUANTITY Qp     │
└──────────────────────────┘
            │
            ▼
        ( RETURN )
```

# FIG.9

SECOND FUEL INJECTION QUANTITY Qm — LARGE / SMALL

ACCELERATOR OPENING
APO INCREASING

LOW ◄— ENGINE SPEED Ne —► HIGH

# FIG.10

SECOND FUEL INJECTION QUANTITY Qm — LARGE / SMALL

LOW ◄— ENGINE SPEED Ne —► HIGH

FIRST FUEL FUEL
INJECTION QUANTITY
Qp INCREASING

31

# FIG.11

```
              ( FROM FIG.2 )
                    │        ╱S71
                    ▼
        ┌───────────────────────┐
        │    CONTROL EXHAUST     │
        │   EXCESS AIR RATIO     │
        │     λ TO TARGET        │
        └───────────────────────┘
                    │             ╱S72
                    ▼                        NO
            ◇─────────────────◇──────────────┐
             ╲  rqDESUL = 1  ╱                │
              ╲      ?      ╱                 │
               ◇───────────◇                 │
                    │ YES  ╱S73               │
                    ▼                         │
        ┌───────────────────────┐            │
        │     READ EXCESS        │            │
        │     AIR RATIO λ        │            │
        └───────────────────────┘            │
                    │      ╱S74               │
                    ▼                         │
        ┌───────────────────────┐            │
        │ DETERMINE SECOND FUEL  │            │
        │  INJECTION TIMING ITm  │            │
        └───────────────────────┘            │
                    │      ╱S75               │
                    ▼                         │
        ┌───────────────────────┐            │
        │ DETERMINE SECOND FUEL  │            │
        │   INJECTION TIMING     │            │
        │   ADJUSTMENT ΔITm      │            │
        └───────────────────────┘            │
                    │      ╱S76               │
                    ▼                         │
        ┌───────────────────────┐            │
        │     ITm = ITm+ΔITm     │            │
        └───────────────────────┘            │
                    │             ╱S77        │
         NO         ▼                         │
        ┌──────◇─────────────────◇            │
        │       ╲  ΔITm = ΔITm1 ╱             │
        │        ╲      ?      ╱              │
        │         ◇───────────◇               │
        │              │ YES    ╱S78          │
        │              ▼                      │
        │  ┌───────────────────────┐          │
        │  │     rqDESUL = 0        │          │
        │  └───────────────────────┘          │
        │              │◄──────────────────────┘
        │              ▼
        │  ┌───────────────────────┐
        │  │     GO TO FIG.12       │
        │  └───────────────────────┘
        │              │
        └──────────────┤
                       ▼
                 ( RETURN )
```

# FIG.12

FROM FIG.11

READ DPF
TEMPERATURE Tdpf — S101

Tdpf ≧ T21 ? — S102
NO

YES — S103

Tdpf ≦ T22 ? — S103
NO

YES — S104

t ≧ treg? — S104
NO

YES

RETARD SECOND
FUEL INJECTION
TIMING ITm — S107

ADJUST SECOND
FUEL INJECTION
QUANTITY Qm — S108

ADVANCE SECOND
FUEL INJECTION
TIMING ITm — S109

ADJUST SECOND
FUEL INJECTION
QUANTITY Qm — S110

Freg = 0, PMQ= 0 — S105

Frec = 1 — S106

RETURN

# FIG.13

# FIG.14

# FIG.15

# FIG.16

# FIG.17

# FIG.18

# FIG.19

# FIG.20

```
        ┌──────────────┐
        │ FROM FIG.2   │
        └──────┬───────┘
               │            S91
        ┌──────▼──────────┐
        │ CONTROL EXHAUST │
        │ EXCESS AIR RATIO λ│
        │ TO STOICHIOMETRIC │
        └──────┬──────────┘
               │            S92
            ◇ rqREG = 1? ◇──── NO ──┐
               │                     │
              YES    S93             │
        ┌──────▼──────────┐         │
        │ READ EXCESS     │         │
        │ AIR RATIO λ     │         │
        └──────┬──────────┘         │
               │            S94      │
        ┌──────▼──────────┐         │
        │ DETERMINE SECOND FUEL      │
        │ INJECTION TIMING ITm       │
        └──────┬──────────┘         │
               │            S95      │
        ┌──────▼──────────┐         │
        │ DETERMINE SECOND FUEL      │
        │ INJECTION TIMING           │
        │ ADJUSTMENT ΔITm            │
        └──────┬──────────┘         │
               │            S96      │
        ┌──────▼──────────┐         │
        │ ITm = ITm + ΔITm │        │
        └──────┬──────────┘         │
               │            S97      │
    ┌── NO ──◇ ΔITm = ΔITm2 ? ◇     │
    │          │                    │
    │         YES        S98        │
    │   ┌──────▼──────────┐         │
    │   │ rqREG = 0       │         │
    │   └──────┬──────────┘         │
    │          │◄────────────────────┘
    │   ┌──────▼──────────┐
    │   │ GO TO FIG.21    │
    │   └──────┬──────────┘
    └──────────┤
        ┌──────▼───────┐
        │  RETURN      │
        └──────────────┘
```

- S91: CONTROL EXHAUST EXCESS AIR RATIO λ TO STOICHIOMETRIC
- S92: rqREG = 1?
- S93: READ EXCESS AIR RATIO λ
- S94: DETERMINE SECOND FUEL INJECTION TIMING ITm
- S95: DETERMINE SECOND FUEL INJECTION TIMING ADJUSTMENT ΔITm
- S96: ITm = ITm + ΔITm
- S97: ΔITm = ΔITm2 ?
- S98: rqREG = 0

# FIG.21

FROM FIG.20

READ NOx TRAP TEMPERATURE Tnox — S201

Tnox ≥ T12 ? — S202 — NO

YES — S203

t ≥ tdesul ? — NO

YES

Fdesul = 0, SOX = 0 — S204

NOX = 0, rqSP = 0 — S205

Frec = 1 — S206

RETARD SECOND FUEL INJECTION TIMING ITm — S207

ADJUST SECOND FUEL INJECTION QUANTITY Qm — S208

RETURN

# FIG.22

```
        ( FROM FIG.2 )
              │
              │        ⟋S301
              ▼
   ┌──────────────────────┐
   │  CONTROL EXHAUST     │
   │  EXCESS AIR RATIO    │
   │  λ TO TARGET         │
   └──────────────────────┘
              │
              │          ⟋S302
              ▼              NO
         ╱─────────╲ ────────────┐
        ╱ t ≧ tspike? ╲          │
         ╲─────────╱            │
              │                  │
           YES ⟋S303            │
              ▼                  │
   ┌──────────────────────┐     │
   │  Fsp = 0, NOX = 0    │     │
   └──────────────────────┘     │
              │                  │
              ▼◄─────────────────┘
         ( RETURN )
```

# FIG.23

FROM FIG.2

S401

READ DPF
TEMPERATURE Tdpf

S402

CONTROL EXHAUST
EXCESS AIR RATIO
λ TO TARGET

S403

Tdpf ≦ T23
?

NO

YES S404

Frec = 0

RETURN

# FIG.24

TARGET INTAKE AIR
QUANTITY tQacrec
INCREASING

MAIN FUEL INJECTION
QUANTITY Qmain

LARGE

SMALL

LOW ◄—— ——► HIGH

ENGINE SPEED Ne

# FIG.25

```
         ┌─────────────────┐
         │  FROM FIG.2     │
         └─────────────────┘
                  │        ╱S501
       NO    ┌──────────────┐
    ┌────────│ rqDESUL = 0? │
    │        └──────────────┘
    │             │ YES
    │             ↓        ╱S503
    │         ┌──────────┐    NO
    │         │ rqSP = 0?│─────────────┐
    │         └──────────┘             │
    │             │ YES                ↓        ╱S506
    │                          ┌───────────────┐   NO
    │   ╱S502                  │   LOW NOx      │────────┐
    │ ┌──────────┐             │  CONDITION     │        │
    │ │Fdesul = 1│             │       ?        │        │
    │ └──────────┘             └───────────────┘        │
    │                                │ YES               │
    │                                ↓        ╱S507       │
    │                          ┌───────────────┐   NO     │
    │                          │  Tdpf ≧ T24?   │─────────→│
    │                          └───────────────┘          │
    │                                │ YES                 │
    │             ←──────────────────┘                     │
    │             ↓                            ╱S508       │
    │      ┌──────────────┐            ┌──────────┐        │
    │      │ SPLIT RETARD │   NO       │ Fsp = 1  │←───────┘
    │      │ COMBUSTION   │────┐       └──────────┘
    │      │   REGION?    │    │
    │      └──────────────┘    │
    │             │ YES        │
    │             ↓   ╱S505    │
    │      ┌──────────┐        │
    │      │ Freg = 1 │        │
    │      └──────────┘        │
    │             │            │
    └─────────────┴────────────┘
                  ↓
         ┌─────────────┐
         │   RETURN    │
         └─────────────┘
```

43

# FIG.26

# FIG.27

FROM FIG.2

S601

Tnox ≥ T13 ? — NO

YES

S604

rqSP = 0 ? — YES / NO

YES →

S605

Fsp = 1

S602

SPLIT RETARD COMBUSTION REGION ? — NO

YES

S603

Fdesul = 1

RETURN

# FIG.28

FROM FIG.2

S701

Fsp = 1

RETURN

# FIG.29

```
  ( FROM FIG.2 )
        │
        ▼
┌───────────────────┐  ⟋S801
│     rqREG = 1     │
└───────────────────┘
        │
        ▼
  ( RETURN )
```

# FIG.30

```
  ( FROM FIG.2 )
        │
        ▼
┌───────────────────┐  ⟋S901
│    rqDESUL = 1    │
└───────────────────┘
        │
        ▼
  ( RETURN )
```

# FIG.31

```
  ( FROM FIG.2 )
        │
        ▼
┌───────────────────┐  ⟋S1001
│     rqSP = 1      │
└───────────────────┘
        │
        ▼
  ( RETURN )
```

# FIG.32

FROM FIG.2

READ NOx TRAP
TEMPERATURE Tnox — S1101

SPLIT
RETARD COMBUSTION
REGION
? — S1102

NO

YES

OPERATE ENGINE IN
SPLIT RETARD
COMBUSTION MODE — S1103

$Tnox \geqq T11$
? — S1104

NO

YES

RETURN